(19) Europäisches Patentamt
European Patent Office
Office européen des brevets

(11) EP 3 197 010 A1

(12) **EUROPEAN PATENT APPLICATION**
published in accordance with Art. 153(4) EPC

(43) Date of publication:
26.07.2017 Bulletin 2017/30

(51) Int Cl.:
H02J 13/00 (2006.01)    H02J 3/32 (2006.01)

(21) Application number: 15827370.6

(22) Date of filing: 15.07.2015

(86) International application number:
PCT/JP2015/070255

(87) International publication number:
WO 2016/017425 (04.02.2016 Gazette 2016/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 31.07.2014 JP 2014156203

(71) Applicant: NEC Corporation
Tokyo 108-8001 (JP)
(72) Inventors:
• KUDO, Koji
  Tokyo 108-8001 (JP)
• SAKUMA, Hisato
  Tokyo 108-8001 (JP)
• YANO, Hitoshi
  Tokyo 108-8001 (JP)

(74) Representative: Vossius & Partner
Patentanwälte Rechtsanwälte mbB
Siebertstrasse 3
81675 München (DE)

(54) **CONTROL DEVICE, ELECTRICAL STORAGE DEVICE, CONTROL ASSISTANCE DEVICE, CONTROL METHOD, CONTROL ASSISTANCE METHOD, AND RECORDING MEDIUM**

(57) The present invention allows the realization of sufficient control precision and control reliability when using a power supply/demand adjustment device group. A control device (A) that controls power supply/demand adjustment devices includes a communication unit (A1) that receives operation control information of the power supply/demand adjustment devices and a control unit (A2) that executes operation control of the power supply/demand adjustment devices on the basis of the operation control information received by the communication unit. There is a difference, in at least one of the intervals from among the interval for receiving the operation control information and the interval for executing the operation control, between the control device that controls power supply/demand adjustment devices and other control devices that are in different states.

FIG. 1

**Description**

Technical Field

The present invention relates to a control device, an electrical storage device, a control assistance device, a control method, a control assistance method, and a program, and more particularly relates to a control device, an electrical storage device, a control assistance device, a control method, a control assistance method, and a program for controlling power supply/demand adjustment devices.

Background Art

A method of using power supply/demand adjustment devices such as storage batteries is known as a method of performing power supply/demand adjustment devices.
Patent Documents 1 and 2 described systems that use customer-side batteries for performing power supply/demand adjustment. In the system described in Patent Document 1, an EMS (Energy Management System) that functions as a central control device transmits messages instructing charging/discharging control of the storage battery system to the customer-side EMS. The customer-side EMS controls charging/discharging of the storage battery system on the customer-side in accordance with these messages.
In the system described in Patent Document 2, a central load dispatching device transmits control information for controlling storage batteries to a hierarchical supply/demand control device. The hierarchical supply/demand control device that is connected to the storage batteries controls the storage batteries in accordance with the control information.
In the interest of simplifying of the explanation, the "EMS" described in Patent Document 1 and the "central load dispatching device" described in Patent Document 2 are hereinbelow together referred to as a "central control device." In addition, the "customer-side EMS" described in Patent Document 1 and the "hierarchical supply/demand control device connected to the storage batteries" described in Patent Document 2 are hereinbelow together referred to as a "local control device." Finally, the "messages" described in Patent Document 1 and the "control information" described in Patent Document 2 are hereinbelow together referred to as "operation control information."

Literature of the Prior Art

Patent Documents

Patent Document 1: Japanese Unexamined Patent Application Publication No. 2014-039353
Patent Document 2: Japanese Patent No. 5460622

Summary of the Invention

Problem to be Solved by the Invention

However, in the systems described in Patent Documents 1 and 2, the concern arises that information for performing control of storage batteries will be received at the same interval and that the charging/discharging of storage batteries will be executed at the same interval in power storage systems having different states. The problem therefore arises that sufficient control precision and control reliability cannot be realized for a storage battery group.
It is an example object of the present invention is to provide a control device, an electrical storage device, a control assistance device, a control method, a control assistance method that can solve the above-described problem.

Means for Solving the Problem

The control device of an example aspect of the present invention is a control device that controls power supply/demand adjustment devices and that includes a communication unit that receives operation control information of the power supply/demand adjustment devices and a control unit that executes operation control of the power supply/demand adjustment devices on the basis of the operation control information that was received by the communication unit, there is a difference, in at least one of the intervals from among the interval for receiving the operation control information and the interval for executing the operation control, between the control device that controls power supply/demand adjustment devices and other control devices that are in different states.
The electrical storage device of an example aspect of the present invention is an electrical storage device that accumulates electric power, that includes a battery that is connected to a power grid, a communication unit that receives operation control information of the battery, and a control unit that executes operation control of the battery on the basis of operation control information that is received by the communication unit, and there is a difference, at least in one of the intervals from among the interval for receiving operation control information and the interval for executing the operational control, between the electrical storage device that accumulates electric power and other electrical storage devices that are in different states.

The control assistance device of an example aspect of the present invention includes: a communication unit that transmits, to each of control devices that control power supply/demand adjustment devices, operation control information of the power supply/demand adjustment devices, and a control unit that causes an interval for transmitting the operation control information by the communication unit to differ among the control devices that are in different states.

Another control assistance device of an example aspect of the present invention includes: a communication unit that transmits, to each of control devices that control power supply/demand adjustment devices, operation control information of the power supply/demand adjustment devices and specification information that specifies the execution interval of operation control of the power supply/demand adjustment devices on the basis of the operation control information; and a control unit that causes a difference, in at least one of the intervals from among the interval for transmitting operation control information by the communication unit and the execution interval specified in the specification information that is transmitted from the communication unit, among the control devices that are in different states.

The control method of an example aspect of the present invention is a control method that is carried out by a control device that controls power supply/demand adjustment devices and that includes: receiving operation control information of the power supply/demand adjustment devices, and executing operation control of the power supply/demand adjustment devices on the basis of the operation control information, there is a difference, in at least one of the intervals from among the interval for receiving the operation control information and the interval for executing the operation control, between the control device that controls power supply/demand adjustment devices and other control devices that are in different states.

Another control method of an example aspect of the present invention is a control method that is carried out by a electrical storage device that accumulates power and that includes: receiving operation control information of a battery that is connected to a power grid and executing operation control of the battery on the basis of the operation control information, there is a difference, in at least one of the intervals from among the interval for receiving the operation control information and the interval for executing the operational control, between the electrical storage device that accumulates power and other electrical storage devices that are in different states.

Yet another control assistance method of an example aspect of the present invention includes: transmitting, to each of control devices that control power supply/demand adjustment devices, operation control information of the power supply/demand adjustment devices, the interval for transmitting the operation control information is caused to differ among the control devices that are in different states.

Another control assistance method of an example aspect of the present invention includes: transmitting, to each of control devices that control power supply/demand adjustment devices, operation control information of the power supply/demand adjustment devices and specification information that specifies the execution interval of operation control of the power supply/demand adjustment devices on the basis of the operation control information, at least one of the intervals from among the interval for transmitting the operation control information and the execution interval that is specified in the specification information that is transmitted from the communication unit is caused to differ among the control devices that are in different states.

The recording medium of the present invention is a recording medium that can be read by a computer and on which is recorded a program for causing a computer of a device that controls power supply/demand adjustment devices to execute a communication procedure of receiving operation control information of the power supply/demand adjustment devices and a control procedure of executing operation control of the power supply/demand adjustment devices on the basis of the operation control information, there is a difference, in at least one of the intervals from among the interval for receiving the operation control information and the interval for executing the operational control, between the controls power supply/demand adjustment devices and other control devices that are in different states.

Another recording medium of the present invention is a recording medium that can be read by a computer and on which is recorded a program for causing a computer to execute a communication procedure of transmitting, to each of control devices that control power supply/demand adjustment devices, operation control information of the power supply/demand adjustment devices and a control procedure of causing the interval for transmitting the operation control information to differ among the control devices that are in different states.

Yet another recording medium of the present invention is a recording medium that can be read by a computer and on which is recorded a program that causes a computer to execute a communication procedure of transmitting, to each of control devices that control power supply/demand adjustment devices, operation control information of the power supply/demand adjustment devices and specification information that specifies the execution interval of the operation control of the power supply/demand adjustment devices on the basis of the operation control information and a control procedure causing at least one of the intervals from among the interval for transmitting the operation control information and the execution interval that is specified in the specification information that is transmitted from the communication unit to differ among the control devices that are in different states.

Effect of the Invention

An example advantage according to the invention is a difference can be caused between the interval for receiving operation control information and the interval for executing operation control among control devices that are in different states, whereby sufficient control precision and control reliability can be realized when using a power supply/demand adjustment device group.

Brief Description of the Drawings

FIG. 1 shows control device A of the first example embodiment of the present invention.
FIG. 2 is a flow chart for describing the operation of control device A.
FIG. 3 shows electrical storage device B of the second example embodiment of the present invention.
FIG. 4 shows control assistance device C of the third example embodiment of the present invention.
FIG. 5 is a flow chart for describing the operation of control assistance device C.
FIG. 6 shows control assistance device D of the fourth example embodiment of the present invention.
FIG. 7 is a flow chart for describing the operation of control assistance device D.
FIG. 8 shows power control system 1000 that adopts the battery control system of the fifth example embodiment of the present invention.
FIG. 9 shows an example of load dispatching unit 2, central control device 7, and a plurality of apparatus control devices 8.
FIG. 10A shows an example of storage battery distribution ratio curve 202a of the time of discharging.
FIG. 10B shows an example of storage battery distribution ratio curve 202b of the time of charging.
FIG. 11A shows an example of the DR2 charging/discharging gain line.
FIG. 11B shows an example of the DR3 drooping characteristic line.
FIG. 12 is a sequence diagram for describing the $P_{ES-DR1}$ derivation operation.
FIG. 13 is a sequence diagram for describing the comprehension operation.
FIG. 14 is a sequence diagram for describing the allotment operation.
FIG. 15 shows an example of local charging/discharging gain line 800A.
FIG. 16 is a sequence diagram for describing the charging/discharging control operation.
FIG. 17 is a sequence diagram for describing the DR3 comprehension operation.
FIG. 18 is a sequence diagram for describing the DR3 allotment operation.
FIG. 19 is a sequence diagram for describing the charging/discharging control operation.
FIG. 20 shows the relation of periods TA1, TA2, TB1, TB2, TC1, and TC2.

Best Mode for Carrying Out the Invention

Example embodiments of the present invention are next described with reference to the accompanying drawings.

First Example embodiment

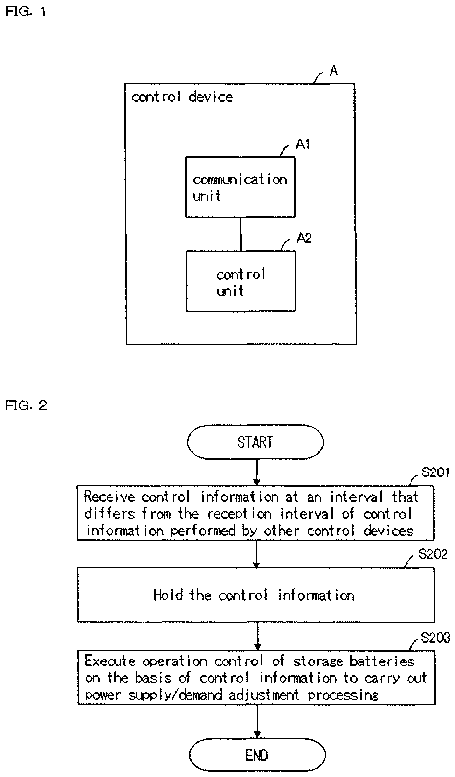

FIG. 1 shows control device A of the first example embodiment of the present invention. Control device A includes communication unit A1 and control unit A2.
Communication unit A1 receives operation control information of storage batteries that are connected to a power grid. Communication unit A1 receives the operation control information from, for example, an outside device.
A storage battery is an example of a power supply/demand adjustment device. The power supply/demand adjustment device is not limited to a storage battery and can be altered as necessary. For example, an electrical appliance or an electric vehicle may also be used as a power supply/demand adjustment device.
Control unit A2 carries out power supply/demand adjustment processing by implementing control of the operation (charging and discharging) of a storage battery that is connected to a power grid on the basis of operation control information that is received by communication unit A1.
Here, the interval for receiving operation control information that is carried out by communication unit A1 differs from the interval for receiving operation control information that is performed by other control devices that are in different states from control device A (hereinbelow referred to as simply "other control devices").

A state in which the power supply/demand adjustment processing differs can be offered as an example of a different state.

Examples of the power supply/demand adjustment processing include a power demand reduction process, an LFC (Load Frequency Control) process, and a GF (Governor Free) process.

The power demand reduction process is a process of performing peak cutting of the power demand.

The LFC process and the GF process are processes of controlling (stabilizing) the grid frequency of the power grid.

The power supply/demand adjustment processing is not limited to the power demand reduction process, LFC process, and GF process.

In addition, the different state is not limited to the power supply/demand adjustment processing and can be altered as appropriate. For example, the different state may also be a state in which the communication characteristics differ or a state in which the battery characteristics of the storage batteries that are to be controlled differ.

States in which the communication delay times differ, states in which the packet error rates (PER) differ, or states in which the bit error rates (BER) differ can also be offered as states in which the communication characteristics differ.

Under circumstances in which a plurality of communication delay time ranges have been set in advance, states in which the communication delay times belong to different communication delay time ranges may be used as states in which the communication delay times differ.

Under circumstances in which a plurality of packet error rate (PER) ranges have been set in advance, states in which packet error rates (PER) belong to different packet error rate (PER) ranges may be used as states in which packet error rates (PER) differ.

A state in which bit error rates (BER) belong to, of a plurality of bit error rate (BER) ranges that have been determined in advance, different bit error rate (BER) ranges may be used as states in which bit error rates (BER) differ.

States in which the battery characteristics of storage batteries that are to be controlled differ include a state in which the residual capacity differs, a state in which the residual empty capacity differs, a state in which the SOC (State Of Charge) differs, a state in which the charging/discharging outputs differ, a state in which the charging/discharging delay times differ, and a state in which the longest continuous charging/discharging times differ.

Under circumstances in which a plurality of residual capacity ranges have been set in advance, a state in which residual capacity belongs to different residual capacity ranges may be used as a state in which the residual capacity differs.

Under circumstances in which a plurality of residual empty capacity ranges have been set in advance, a state in which residual empty capacity belongs to different residual empty capacity ranges may be used as a state in which residual empty capacity differs.

Under circumstances in which a plurality of SOC ranges have been set in advance, a state in which the SOC belongs to different SOC ranges may be used as a state in which SOC differs.

Under circumstances in which a plurality of charging/discharging output ranges have been set in advance, a state in which charging/discharging outputs belong to different charging/discharging output ranges may be used as a state in which the charging/discharging output differs.

Under circumstances in which a plurality of charging/discharging delay time ranges have been set in advance, a state in which the charging/discharging delay times belong to different charging/discharging delay time ranges may be used as a state in which the charging/discharging delay times differ.

Under circumstances in which a plurality of longest continuous charging/discharging time ranges have been set in advance, a state in which the longest continuous charging/discharging times belong to different longest continuous charging/discharging time ranges may be used as a state in which the longest continuous charging/discharging times differ.

In addition, the interval at which control unit A2 carries out the execution of operation control of storage batteries differs from the interval at which other control units carry out the execution of operation control of storage batteries.

In control unit A, the interval for receiving operation control information is equal to or greater than the interval for executing operation control of storage batteries.

The operation of the present example embodiment is next described.

FIG. 2 is a flow chart for describing the operation of control device A.

Communication unit A1 receives operation control information at an interval that differs from the interval of the reception of operation control information carried out by other control devices (Step S201). Communication unit A1 then supplies the operation control information to control unit A2.

Control unit A2 holds the operation control information that was received from communication unit A1 (Step S202). When control unit A2 receives new operation control information in the state of holding operation control information, control unit A2 updates the operation control information that it is holding to the new operation control information.

Control unit A 2 next executes operation control of storage batteries while repeatedly using the operation control information that it holds to carry out power supply/demand adjustment processing at an interval that differs from the interval for executing operation control of storage batteries performed by other control devices (Step S203).

The effect of the present example embodiment is next described.

In the present example embodiment, the interval of the reception of operation control information performed by communication unit A1 differs from the interval of reception of operation control information performed by other control devices that are in states that differ from control device A.

As a result, the interval for receiving operation control information can be caused to differ among control devices having differing states. It is therefore possible to use a storage battery group to realize sufficient control precision and control reliability.

In the present example embodiment, moreover, the interval for executing operation control of storage batteries performed by control unit A2 differs from the interval for executing operation control of storage batteries performed by other control devices that are in different states from control device A.

As a result, the interval for executing operation control can be caused to differ among control devices that are in different states. It is therefore possible to realize sufficient control precision and control reliability when using a storage battery group.

A modification of the present example embodiment is next described.

If the reception interval of operation control information at communication unit A1 differs from the reception interval of operation control information at other control devices that are in different states than control device A, the interval for executing operation control of storage batteries at control unit A2 may permissibly be the same as the interval for executing operation control of storage batteries at the other control devices.

If the interval for executing operation control of storage batteries at control unit A2 differs from the interval for executing operation control of storage batteries at other control devices that are in different states from control device A, the interval for receiving operation control information at communication unit A1 may also be the same as the interval for receiving operation control information at the other control devices.

Further, communication unit A1 may transmit the state of the storage batteries (for example, residual capacity or SOC) to an outside device, and communication unit A1 may receive operation control information that accords with the state of the storage batteries from the outside device.

In addition, the power supply/demand adjustment processing, the interval for receiving operation control information, and the interval for executing operation control of storage batteries may each accord with demands of power supply/demand adjustment (demands of power supply/demand adjustment processing).

The interval for receiving operation control information and the interval for executing operation control differ on the basis of any information such as the type of power supply/demand adjustment processing, the communication characteristics, or the storage battery characteristics.

However, when a portion of the characteristics among the type of power supply/demand adjustment processing, the communication characteristics, and the storage battery characteristics are different and the remaining characteristics are the same, the interval for receiving operation control information or the interval for executing operation control may be different.

For example, when the interval for receiving operation control information and the interval for executing operation control are set so as to differ according to the type of power supply/demand adjustment processing, the interval for receiving operation control information and the interval for executing operation control will be the same when the type of power supply/demand adjustment processing is the same, even if the communication characteristics or storage battery characteristics are the same.

Essentially, there is no need for all of the types of power supply/demand adjustment processing, communication characteristics, and storage battery characteristics to differ, and the interval for receiving operation control information and the interval for executing operation control may be caused to differ among control devices in which a portion of the above-described characteristics (for example, any of the characteristics) differs.

Second Example embodiment

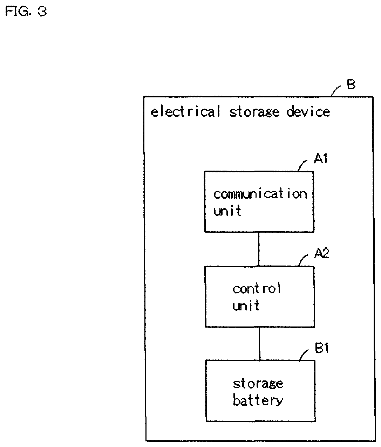

FIG. 3 shows electrical storage device B of the second example embodiment of the present invention. In FIG. 3, components that are identical to components shown in FIG. 1 are given the same reference numbers.

Electrical storage device B of the second example embodiment differs from control device A of the first example embodiment in that it further includes storage battery B1 that is connected to the power grid.

Because electrical storage device B includes communication unit A1 and control unit A2, the present example embodiment obtains the same effects as in the first example embodiment.

In addition, even when electrical storage device B1 is included in an electrical storage system, communication unit A1 and control unit A2 are also provided in the same device even when the device is the storage battery of an electric vehicle.

Third Example embodiment

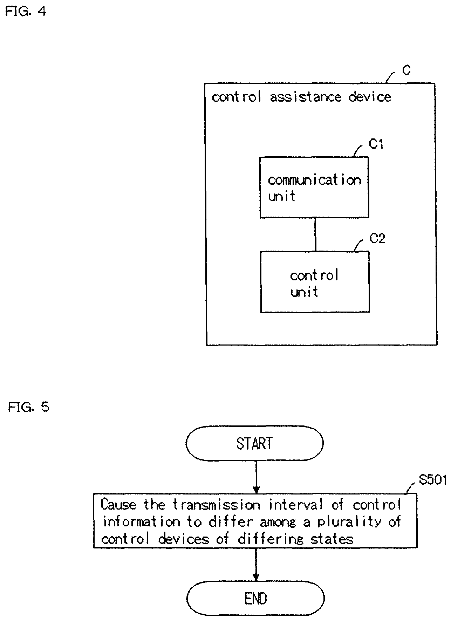

FIG. 4 shows control assistance device C of the third example embodiment of the present invention. Control assistance device C is an example of the "outside device" that was described in the explanation of the first example embodiment.

Control assistance device C includes communication unit C1 and control unit C2. Communication unit C1 transmits operation control information of a storage battery to each of control devices that control storage batteries (for example, control device A shown in FIG. 1 or electrical storage device B shown in FIG. 3).

Control unit C2 causes the interval for transmitting operation control information by communication unit C1 to differ among a plurality of control devices that are in different states.

The operation of the present example embodiment is next described.

FIG. 5 is a flow chart for describing the operation of control assistance device C.

Control unit C2 causes the transmission interval of operation control information by communication unit C1 to differ among a plurality of control devices having different states (Step S501).

Each control device of a different state receives operation control information at a time interval that differs from that of control assistance device C. Each control device controls the operation of storage batteries on the basis of the operation control information to execute power supply/demand adjustment processing.

The effect of the present example embodiment is next described.

In the present example embodiment, control unit C2 causes the interval for transmitting operation control information by communication unit C1 to differ among a plurality of control devices having different states.

As a result, the interval for receiving operation control information can be caused to differ among control devices that are in different states. Sufficient control precision and control reliability can therefore be realized when using a storage battery group.

Fourth Example embodiment

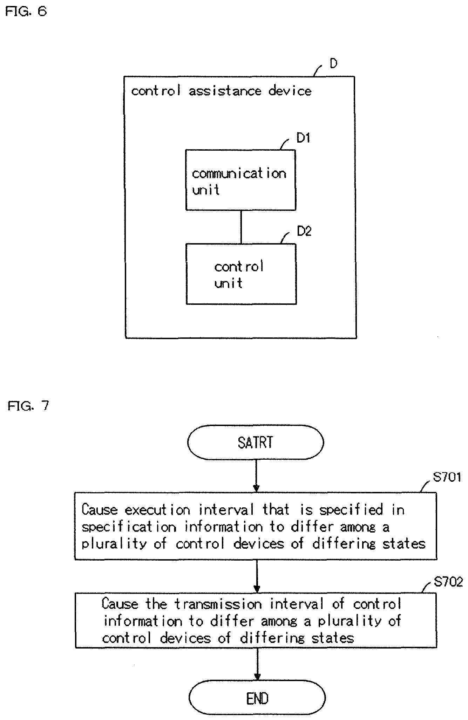

FIG. 6 shows control assistance device D of the fourth example embodiment of the present invention. Control assistance device D is an example of the "outside device" described in the explanation of the first example embodiment.

Control assistance device D includes communication unit D1 and control unit D2.

Communication unit D1 transmits operation control information of storage batteries and specification information that specifies the execution interval of the operation control of the storage batteries on the basis of the operation control information to each of control devices that control storage batteries (for example, control device A shown in FIG. 1 and electrical storage device B shown in FIG. 3).

Control unit D2 causes the interval for transmitting operation control information by communication unit D1 to differ among a plurality of control devices that are in different states. In addition, control unit D2 causes the execution interval that is specified in the specification information that is transmitted from communication unit D1 to differ among the plurality of control devices of different states.

The operation of the present example embodiment is next described.

FIG. 7 is a flow chart for describing the operation of control assistance device D.

Control unit D2 causes the execution interval that is specified by the specification information that was transmitted from communication unit D1 to differ among a plurality of control devices of different states (Step S701).

Control unit D2 next causes the interval for transmitting operation control information by communication unit D1 to differ among the plurality of control devices of different states (Step S702).

Each control device receives the specification information and the operation control information from control assistance device D. Each control device controls the operation of storage batteries on the basis of the operation control information at the execution interval that is specified in the specification information to execute power supply/demand adjustment processing.

The effect of the present example embodiment is next described.

In the present example embodiment, control unit D2 causes the interval for transmitting operation control information by communication unit D1 to differ among a plurality of control devices having different states. As a result, the interval for receiving operation control information can be caused to differ among control devices of different states.

In addition, control unit D2 causes the execution interval that is specified in the specification information that is transmitted from communication unit D1 to differ among the plurality of control devices that are in different states. The interval for executing operation control can therefore be caused to differ among control devices of different states. A storage battery group can therefore be used to realize sufficient control precision and to control reliability.

A modification of the present example embodiment is next described.

Control unit D2 may also execute only one of a process of causing the interval for transmitting operation control information by communication unit D1 to differ among a plurality of control devices that are in different states and a process of causing the execution interval that is specified in specification information that is transmitted from communication unit D1 to differ among the plurality of control devices of different states.

Fifth Example embodiment

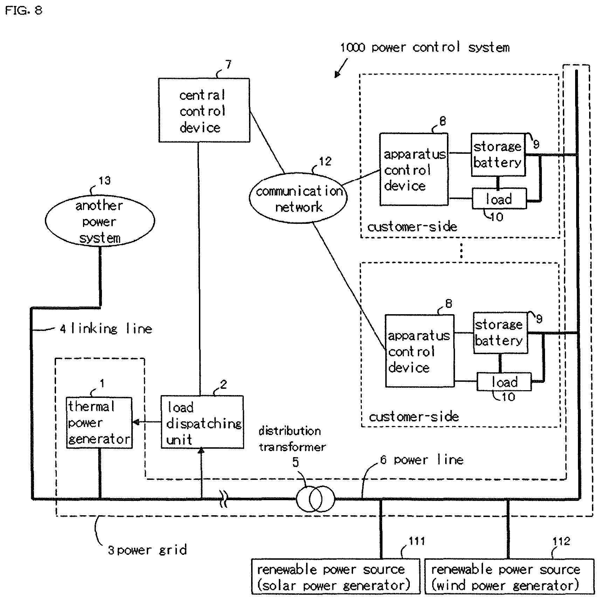

FIG. 8 shows power control system 1000 that adopts the battery control system of the fifth example embodiment of the present invention.

Power control system 1000 includes: thermal power generator 1, load dispatching unit 2, power grid 3, linking line 4, distribution transformer 5, power line 6, central control device 7, a plurality of apparatus control devices 8, a plurality of storage batteries 9, and a plurality of loads 10.

Thermal power generator 1, load dispatching unit 2, power grid 3, linking line 4, distribution transformer 5, and power line 6 are maintained by a power company.

Central control device 7 is maintained by an aggregator.

Apparatus control devices 8, storage batteries 9, and loads 10 are maintained by customers.

Thermal power generator 1, distribution transformer 5, and power line 6 are included in power grid 3. Renewable power source (solar power generator) 111 and renewable power source (wind power generator) 112 are connected to power grid 3.

Central control device 7 is an example of a control assistance device or an outside device. Apparatus control devices 8 are examples of control devices. Storage batteries 9 are an example of power supply/demand adjustment devices. Storage batteries 9 are connected to power grid 3. Loads 10 are, for example, household appliances.

A summary of the main functions of power control system 1000 is first described.

In the present example embodiment, storage batteries 9 and apparatus control devices 8 maintained by each customer are assigned for each demand (demand regarding power supply/demand adjustment processing) relating to power supply/demand adjustment from the power company.

On the power company side, load dispatching unit 2 transmits a plurality of demands to the aggregator-side central control device 7.

For each demand, central control device 7 creates operation control information for controlling storage batteries 9 (hereinbelow also referred to as "batteries that are the objects of control") that are assigned to the demand for each apparatus control device 8 that is assigned to a demand. For example, central control device 7 creates operation control information that reflects the state of the batteries that are to be controlled (for example, the residual capacity or SOC) and the content of power supply/demand adjustment processing that accords with the demand.

Central control device 7 then transmits the operation control information that corresponds to apparatus control devices 8 to apparatus control devices 8.

Apparatus control devices 8, having received the operation control information, control the operation of the batteries that are to be controlled in accordance with the operation control information to execute the power supply/demand adjustment processing that accords with the demand of the power company. The power supply/demand adjustment processing that accords with the demand of the power company means a response to the demand of the power company.

In the present example embodiment, a demand reduction (for example, peak cutting) demand, an LFC demand, and a GF demand are used as the demands of the power company.

The demands of the power company are not limited to these demands and can be altered as appropriate. For example, other demands of the power company may be a demand creation (for example, bottom up) demand, a rapid response demand, a interruptible load demand, a supply power load demand, a hot reserve demand, or a spinning reserve demand.

When the demand from the power company is a demand reduction demand, central control device 7 generates operation control information for executing a process (hereinbelow referred to as "DR application 1 ") of deleting the power (amount of power) that is requested in the demand reduction demand. The operation control information for executing DR application 1 (demand reduction process) is hereinbelow referred to as "DR application 1 operation control information."

When the demand from the power company is an LFC demand, central control device 7 creates operation control information for executing a process (hereinbelow referred to as "DR application 2") of using the integrated value of the frequency deviation of the grid frequency to control the operation of batteries that are the objects of control. Hereinbelow, the operation control information for executing DR application 2 (LFC process) is referred to as "DR application 2 operation control information."

When the demand of the power company is a GF demand, central control device 7 generates operation control information for executing a process (hereinbelow referred to as "DR application 3") of using the frequency deviation of the grid frequency to control the operation of batteries that are the objects of control. The operation control information for executing DR application 3 (GF process) is hereinbelow referred to as "DR application 3 operation control information."

Central control device 7 alters the transmission interval of the operation control information in accordance with the DR application that apparatus control devices 8 are executing.

For example, central control device 7 alters the interval for transmitting operation control information in accordance with the execution condition (for example, an accuracy condition) that is indicated in the demand that corresponds to the DR application. As an example, central control device 7 (control unit 704 described hereinbelow) shortens the interval for transmitting operation control information in proportion to the degree of precision indicated in the demand.

For example, if the degree of precision indicated in a demand increases in the order of DR applications 1, 2, and 3, central control device 7 (control unit 704 described hereinbelow) shortens the interval for transmitting operation control signal in the order of DR applications 1, 2, and 3.

The execution condition indicated in a demand is not limited to precision and can be altered as appropriate. For example, the execution condition indicated in a demand may be reliability. When reliability is sought against communication failures or communication delays, central control device 7 may, for example, enable lengthening the transmission interval of the operation control information of the DR applications 1 and 2.

However, when the degree of variation of the states (for example, SOC) of storage batteries among storage batteries that execute the same DR application is equal to or greater than a fixed value, central control device 7 may shorten the interval for transmitting operation control information of that DR application.

Explanation next regards the reason that central control device 7 shortens the interval for transmitting operation control information of a DR application when the degree of variation of the states of storage batteries is equal to or greater than a fixed value.

When there is variation of the states among a plurality of storage batteries, there is potential for variation to occur in the operation among the storage batteries. As a result, when there is variation of the states among a plurality of storage batteries, the operation of each storage battery is preferably closely controlled. As a result, central control device 7 shortens the interval for transmitting operation control information to closely control the operation of each storage battery.

In addition, central control device 7 changes the operation interval of a DR application according to the DR application that apparatus control devices 8 execute.

For example, central control device 7 changes the operation interval of a DR application according to the execution condition (for example, a precision condition) that is indicated in a demand that corresponds to the DR application. As an example, central control device 7 (control unit 704 described hereinbelow) shortens the operation interval (execution interval) of DR applications 2 and 3 in proportion to the degree of precision indicated in the demand. A resolution on the order of 30 minutes is in some cases sufficient as precision, and in such cases, the operation interval is lengthened within a range of 30 minutes to carry out the operation process with a margin as well as to ensure stability and reliability.

The reason for shortening the operation interval (execution interval) of DR applications 2 and 3 in proportion to the degree of precision indicated in a demand is here described.

The precision indicated in a demand refers to the degree of conformity, with respect to the "target of a power demand curve" that is required by the demand, of the power demand curve that is actually realized by the charging/discharging of the storage batteries in the DR application that accords with the demand. When the actual power demand curve does not conform to the "target of a power demand curve" (i.e., when there is divergence from the target), the precision deteriorates.

If there is a requirement (the requirement of a demand) that the target and the 30-minute integration value of power must match, the precision indicated in the demand is easily satisfied. However, as the object time interval (for example, 30 minutes, 5 minutes, and 1 minute) of the integrated value becomes shorter (i.e., as the precision indicated in the demand increases), the degree of conformity between the target and the actual power demand also increases, and consequently, a shorter execution interval becomes necessary. Essentially, shortening the interval of the execution time enables closer control and therefore improves precision. As a result, central control device 7 (control unit 704 described hereinbelow) shortens the operation interval (execution interval) of DR applications 2 and 3 in proportion to increasing precision indicated in a demand.

Central control device 7 transmits to apparatus control device 8 execution interval information that specifies the execution interval of the operation control of storage batteries that are to be controlled on the basis of operation control information to alter the operation interval of the DR application. The execution interval information is an example of the specification information. For a DR application that is identical in details to an application that has already been implemented in the past, central control device 7 may also use the same execution interval information as the execution interval information that was used in the past to simplify the process.

The configuration of power control system 1000 is next described.

Thermal power generator 1 is an example of a generator. Load dispatching unit 2 communicates with central control device 7. Load dispatching unit 2 transmits, for example, demands (demand reduction, LFC, GF) to central control device 7.

Power grid 3 is a system that supplies power to the customer side. Power grid 3 transforms the voltage of the generated power supplied from thermal power generator 1 to a predetermined voltage at distribution transformer 5. Power grid 3 supplies power at the predetermined voltage to the customer side.

Linking line 4 connects power grid 3 and another power grid 13.

Central control device 7 receives demands (demand reduction, LFC, GF) from load dispatching unit 2.

For each demand and each DR application that accords with a demand, central control device 7 assigns, as the batteries that are the objects of control, storage batteries 9 that satisfy conditions (for example, communication characteristics or response) required by the DR application that accords with the demand to the demand and the DR application that accords with the demand. In addition, conditions required by the DR application means the usage conditions of the DR application.

The method of assigning storage batteries 9 is not limited to a method that uses conditions required by the power supply/demand adjustment processing and can be altered as appropriate. For example, as the method of assigning storage batteries 9, a method may be used of assigning storage batteries 9 as the batteries that are to be controlled to the demand (the DR application that accords with the demand) in accordance with the wishes of customers that maintain storage batteries 9.

In addition, for each demand, central control device 7 assigns to the demand (the DR application that accords with the demand) apparatus control devices 8 that control storage batteries 9 (batteries that are the objects of control) that are assigned to the demand.

Central control device 7 transmits, by way of communication network 12, operation control information of the batteries that are to be controlled to apparatus control devices 8 that are connected to the batteries that are the objects of control.

Apparatus control devices 8 control the operation of the batteries that are to be controlled in accordance with the operation control information.

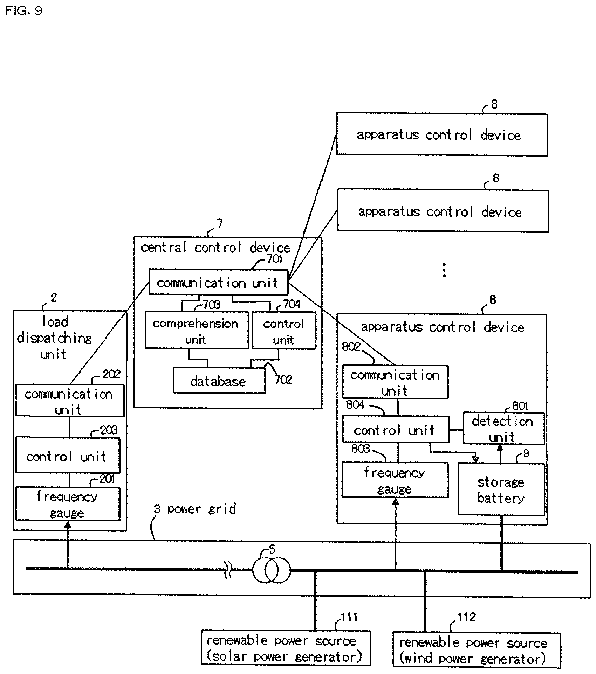

FIG. 9 shows an example of load dispatching unit 2, central control device 7, and a plurality of apparatus control devices 8. In FIG. 9, components that are the same as components shown in FIG. 8 are given the same reference numbers. In FIG. 9, communication network 12 is omitted. Further, in FIG. 9, storage batteries 9 are incorporated in apparatus control devices 8, but storage batteries 9 need not be incorporated in apparatus control devices 8. Apparatus control devices 8 that incorporate storage batteries 9 are an example of electrical storage devices.

Apparatus control devices 8 are first described.

A plurality of apparatus control devices 8 are assigned for each demand and DR application that accords with the demand. One apparatus control device 8 may be assigned to a plurality of demands (DR applications that accord with the demands).

Apparatus control devices 8 control the operation of storage batteries 9. Each apparatus control device 8 includes detection unit 801, communication unit 802, frequency gauge 803, and control unit 804.

Detection unit 801 detects the SOC of storage batteries 9. The SOC of storage batteries 9 is assumed to be a value within the range from 0 to 1. The SOC of storage battery 9 represents the state of storage battery 9. The state of storage battery 9 is not limited to the SOC of storage battery 9 and can be altered as appropriate. For example, the cell temperature, the current amount, or the voltage of storage battery 9 may also be used.

Communication unit 802 communicates with central control device 7.

Frequency gauge 803 detects the grid frequency (grid frequency of power grid 3). The grid frequency fluctuates according to the state of balance between power supply and demand. The grid frequency is an example of the state of the power grid. Frequency gauge 803 may be inside or outside apparatus control device 8.

Control unit 804 controls the charging/discharging operation of storage batteries 9 according to operation control information. For example, control unit 804 controls the charging/discharging operation of storage batteries 9 according to the operation control information of DR application 1. Alternatively, control unit 804 controls the charging/discharging operation of storage batteries 9 according to the operation control information of DR applications 2 and 3 and the grid frequency of power grid 3.

Control unit 804 executes an information procuring operation (transmission/reception process) of obtaining operation control information from central control device 7 and a control operation (battery operation control process) of using operation control information to control the charging/discharging operations of storage batteries 9.

Control unit 804 receives, from central control device 7 by way of communication unit 802, execution interval information for specifying the execution interval of the control of storage batteries 9 on the basis of the operation control information.

Control unit 804 repeatedly executes the information procuring operation while providing time intervals.

Control unit 804 repeatedly executes the control operation in accordance with the execution interval information while providing time intervals that are shorter than the time interval of the information procuring operation.

Central control device 7 is next described.

Central control device 7 puts n apparatus control devices 8 and n storage batteries 9 under control. Central control device 7 includes communication unit 701, database 702, comprehension unit 703, and control unit 704.

Communication unit 701 communicates with each apparatus control device 8 and load dispatching unit 2. For example, communication unit 701 receives SOC and ID (Identification) of storage batteries 9 from each apparatus control device 8.

Database 702 holds a storage battery distribution ratio curve that is used for finding the chargeable/dischargeable capacity of storage batteries 9 from the SOC of storage batteries 9 that was received by communication unit 701. Database 702 further holds the rated output P(n) of each storage battery 9 that is used for finding the chargeable/dischargeable capacity. The rated output of a power conditioner (AC/DC converter) (not shown) that is connected to storage battery 9 is used as the rated output P(n) of storage battery 9.

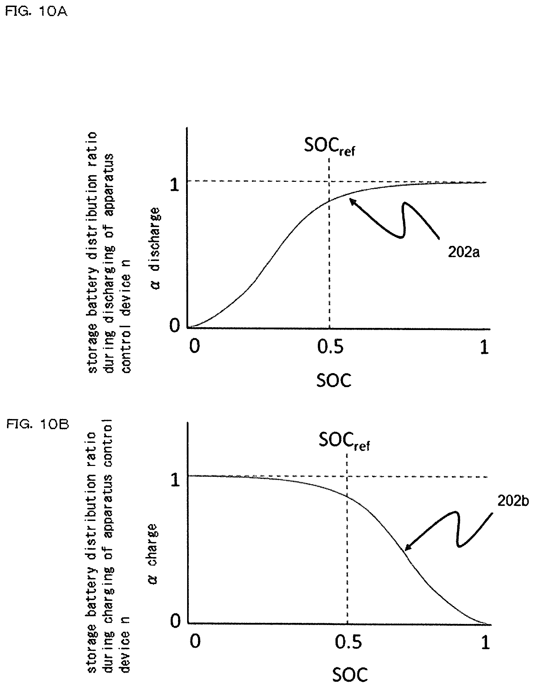

FIGs. 10A and 10B show examples of the storage battery distribution ratio curve. FIG. 10A shows an example of storage battery distribution ratio curve 202a for the time of discharging.

FIG. 10B shows an example of storage battery distribution ratio curve 202b for the time of charging.

Comprehension unit 703 comprehends the power amounts (hereinbelow referred to as "DR1 1 allotment power amount," "DR2 allotment power amount," and "DR3 allotment power amount") that are allotted to each of storage batteries 9 that have been assigned to each DR application in order to adjust the power amounts in power grid 3 in DR applications 1, 2, and 3. Each allotment power amount is an example of the state of the power grid.

Comprehension unit 703 comprehends the DR1 allotment power amount as shown below. Comprehension unit 703 uses the storage battery distribution ratio curve in database 702 to derive from the SOC of storage batteries 9 that have been assigned to DR application 1 the chargeable/dischargeable capacity of the storage battery group (DR application 1 storage battery group) that is made up of storage batteries 9 that have been assigned to DR application1. In the following explanation, the chargeable/dischargeable capacity of the DR application 1 storage battery group is referred to as the "total adjustable capacity $P_{ES-DR1}$."

Comprehension unit 703 transmits the total adjustable capacity $P_{ES-DR1}$ from communication unit 701 to load dispatching unit 2. Comprehension unit 703 then receives DR1 allotment power amount information that shows a DR1 allotment power amount that reflects the total adjustable capacity $P_{ES-DR1}$ from load dispatching unit 2 by way of communication unit 701. Comprehension unit 703 uses the DR1 allotment power amount information to comprehend the DR1 allotment power amount. The DR1 allotment power amount is a fixed number. The DR1 allotment power amount is a number that satisfies the relation: DR1 allotment power amount $\leq$ total adjustable capacity $P_{ES-DR1}$.

Control unit 704 generates DR1 allotment information on the basis of the DR1 allotment power amount that was comprehended by comprehension unit 703. Control unit 704 transmits the DR1 allotment information from communication unit 701 to each apparatus control device 8 that has been assigned to DR application 1.

Comprehension unit 703 comprehends the DR2 allotment power amount as shown below. Comprehension unit 703 uses the storage battery distribution ratio curve in database 702 to derive from the SOC of storage batteries 9 that have been assigned to DR application 2 the chargeable/dischargeable capacity of the storage battery group (DR application 2 storage battery group) that is made up from storage batteries 9 that have been assigned to DR application 2. The storage battery distribution ratio curve used here is not necessarily the same as the storage battery distribution ratio curve that was used in deriving the DR1 allotment power amount. The chargeable/dischargeable capacity of the DR application 2 storage battery group is hereinbelow referred to as the "total adjustable capacity $P_{ES-DR2}$."

Comprehension unit 703 transmits the total adjustable capacity $P_{ES-DR2}$ from communication unit 701 to load dispatching unit 2. Comprehension unit 703 then receives from load dispatching unit 2 by way of communication unit 701 DR2 allotment power amount information that shows a DR2 allotment power amount that reflects the total adjustable capacity $P_{ES-DR2}$. Comprehension unit 703 uses the DR2 allotment power amount information to comprehend the DR2 allotment power amount.

As the DR2 allotment power amount information in the present example embodiment, a DR2 charging/discharging gain line is used that represents the LFC assignment capacity $LFC_{ES-DR2}$ that indicates the DR2 maximum allotment power amount and the maximum value (threshold value) $\Delta f_{max}$ of the integrated value of frequency deviation (although there are $\pm \Delta f_{max}$, the $\pm$ is omitted below in the interest of simplification). The "maximum value of the integrated value of frequency deviation" is used as the threshold value of the integrated value of the amount of divergence from the standard frequency (for example, 50Hz) of the grid frequency. The standard frequency of the grid frequency is stored in control unit 804.

In addition, the "maximum value of the integrated value of frequency deviation" refers to the "maximum amount of divergence of the integrated value of frequency deviation" that can be accommodated by the total output $LFC_{ES-DR2}$ of the multiplicity of storage batteries 9 that have been assigned to DR application 2. When the integrated value of frequency deviation becomes a value that is equal to or greater than the maximum value (threshold value) of the integrated value of frequency deviation, accommodation by $LFC_{ES-DR2}$ becomes difficult.

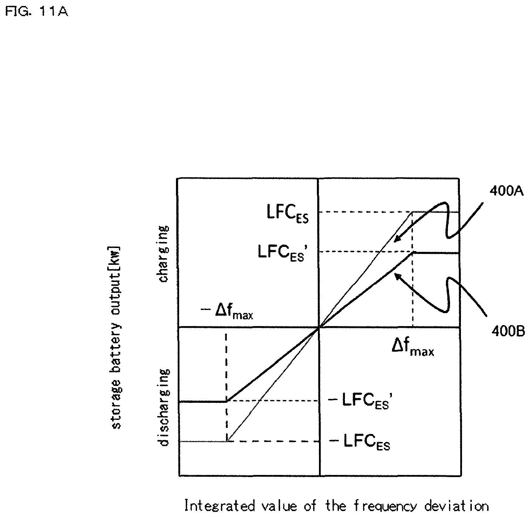

FIG. 11A shows an example of the DR2 charging/discharging gain line. Details of the DR2 charging/discharging gain line will be explained later.

Control unit 704 generates DR2 allotment information (DR2 allotment coefficient K and the maximum value $\Delta f_{max}$ of the integrated value of frequency deviation) on the basis of the SOC of storage batteries 9 that have been assigned to DR application 2 and the DR2 charging/discharging gain line. Control unit 704 transmits the DR2 allotment information from communication unit 701 to each apparatus control device 8 that has been assigned to DR application 2. DR2 allotment coefficient K increases in proportion to the allotment ratio to storage batteries 9 that have been assigned to DR application 2.

Comprehension unit 703 comprehends the DR3 allotment power amount as shown below. Comprehension unit 703 uses a storage battery distribution ratio curve in database 702 to derive, from the SOC of storage batteries 9 that have been assigned to DR application 3, the chargeable/dischargeable capacity of the storage battery group (DR application storage battery group) that is made up from storage batteries 9 that have been assigned to DR application 3. The storage battery distribution ratio curve used here is not necessarily the same as the storage battery distribution ratio curve that was used when deriving the DR1 or DR2 allotment power amount. The chargeable/dischargeable capacity of the DR application 3 storage battery group is hereinbelow referred to as "total adjustable capacity $P_{ES-DR3}$."

Comprehension unit 703 transmits the total adjustable capacity $P_{ES-DR3}$ from communication unit 701 to load dispatching unit 2. Comprehension unit 703 then receives, from load dispatching unit 2 by way of communication unit 701, the DR3 allotment power information that represents a DR3 allotment power amount that reflects the total adjustable capacity $P_{ES-DR3}$. Comprehension unit 703 uses the DR3 allotment power amount information to comprehend the DR3 allotment power amount.

As the DR3 allotment power amount information in the present example embodiment, a DR3 drooping characteristic line is used that represents the GF assignment capacity $GF_{ES-DR3}$ that shows the DR3 maximum allotment power amount and maximum value (threshold value) $+f_{max}$ and $-f_{max}$ of the frequency deviation (later referred to as $f_{max}$ after consolidating $\pm$ in the interest of simplification).

"$GF_{ES-DR3}$" is hereinbelow also referred to as "$LFC_{ES-DR3}$" for convenience in the explanation. The "maximum value of frequency deviation" is used as the threshold value of the amount of divergence from the standard frequency (for example, 50Hz) of the grid frequency.

In addition, the maximum value of frequency deviation" refers to the maximum amount of divergence of frequency deviation" that can be accommodated by the total output $GF_{ES-DR3}$ ($LFC_{ES-DR3}$) of the multiplicity of storage batteries 9 that have been assigned to DR application 3. When the frequency deviation becomes a value equal to or greater than the maximum value (threshold value) of the frequency deviation, accommodation becomes difficult with $GF_{ES-DR3}$ ($LFC_{ES-DR3}$).

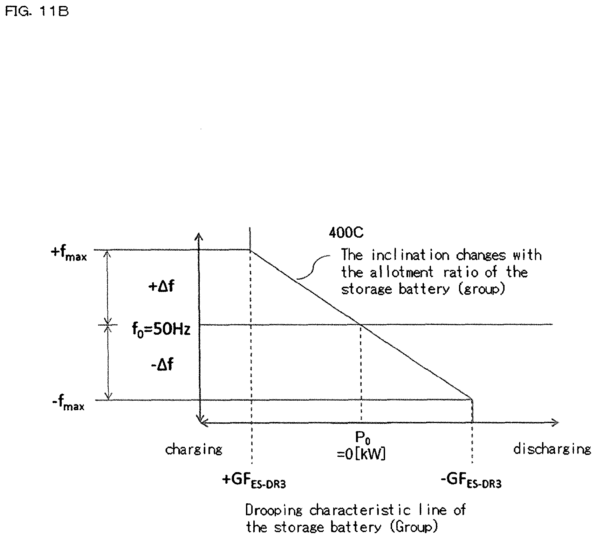

FIG. 11B shows an example of the DR3 drooping characteristic line. Details regarding the DR3 drooping characteristic line will be explained later.

Control unit 704 generates DR3 allotment information (DR3 allotment coefficient K and maximum value $f_{max}$ of frequency deviation) on the basis of the SOC of storage batteries 9 that have been assigned to DR application 3 and the DR3 drooping characteristic line. Control unit 704 transmits the DR3 allotment information from communication unit 701 to each apparatus control device 8 that has been assigned to DR application 3. The DR3 allotment coefficient K increases in proportion to increase of the ratio of allotment to storage batteries 9 that have been assigned to DR application 3.

Load dispatching unit 2 will next be described.

Load dispatching unit 2 includes frequency gauge 201, communication unit 202, and control unit 203.

Frequency gauge 201 detects the grid frequency of power grid 3.

Communication unit 202 communicates with central control device 7.

For example, communication unit 202 receives the total adjustable capacity $P_{ES-DR1}$ $P_{ES-DR2}$, and $P_{ES-DR3}$ from central control device 7.

Control unit 203 controls the operation of load dispatching unit 2.

For example, control unit 203 transmits various demands to central control device 7 by way of communication unit 202.

In addition, control unit 203 generates DR1 allotment power amount information, DR2 allotment power amount information (DR2 charging/discharging gain line), and DR3 allotment power amount information (DR3 drooping characteristic line) as shown hereinbelow.

The method of generating DR1 allotment power amount information is first described.

As the DR1 allotment power amount, control unit 203 assigns to the DR application 1 storage battery group that is the object to be controlled, of the peak-cutting amount that is necessary for the entire power grid, a portion that is equal to or less than total adjustable capacity $P_{ES-DR1}$. Control unit 203 assigns the remaining demand reduction amount to, for example, one or more other central control devices 7. In addition, the total adjustable capacity $P_{ES-DR1}$ is supplied to control unit 203 from communication unit 202.

Control unit 203 transmits DR1 allotment power amount information that represents the DR1 allotment power amount to central control device 7 from communication unit 202.

The method of generating DR2 allotment power amount information (DR2 charging/discharging gain line) is next described.

Control unit 203 uses the grid frequency that was detected by frequency gauge 201 to calculate the area requirement (AR) that is the output correction amount of a power plant. Control unit 203 uses the area requirement AR, the LFC adjustment capacity of thermal power generator 1 that is the object of control, and the total adjustable capacity $P_{ES-DR2}$ to derive the LFC capacity. Control unit 203 procures the LFC adjustment capacity of thermal power generator 1 from the thermal power generator control unit (not shown). The total adjustable capacity $P_{ES-DR2}$ is supplied from communication unit 202 to control unit 203.

Control unit 203 assigns to thermal power generator 1 a capacity obtained by eliminating the rapid change component of the LFC capacity. Control unit 203 assigns the remaining LFC capacity $LFC_{ES-DR2}$ (where $LFC_{ES-DR2} \leq P_{ES-DR2}$) to the DR application 2 storage battery group. For example, control unit 203 uses a high-pass filter that passes, of the LFC capacity, a fluctuation component having a period of ten seconds or less and that does not pass a fluctuation component having a period longer than ten seconds to extract the rapid fluctuation component (capacity $LFC_{ES-DR2}$) from the LFC capacity.

Control unit 203 otherwise parcels out the LFC capacity to thermal power generator 1 and DR application 2 storage battery group in accordance with the ratio (fixed value) of parceling out the LFC capacity to thermal power generator 1 and DR application 2 storage battery group. Control unit 203 treats the capacity $LFC_{ES-DR2}$ as the LFC assignment capacity $LFC_{ES-DR2}$. Control unit 203 generates DR2 charging/discharging gain line (see FIG. 11A) that represents the LFC assignment capacity $LFC_{ES-DR2}$ and the maximum value (threshold value) $\Delta f_{max}$ of the integrated value of the frequency deviation that has been determined in advance.

Control unit 203 transmits the DR2 charging/discharging gain line (DR2 allotment power amount information) from communication unit 202 to central control device 7.

The method of generating DR3 allotment power amount information (DR3 drooping characteristic line) is next described.

Control unit 203 first procures the total adjustable capacity $P_{ES-DR3}$ from communication unit 202 for the GF capacity that is necessary for keeping the frequency deviation of the power grid within a particular range of frequency deviation. Control unit 203 uses the maximum value (threshold value) $f_{max}$ of frequency deviation that was determined in advance and the total adjustable capacity $P_{ES-DR3}$ to give to the storage battery group the GF capacity $GF_{ES-DR3}$ (where $GF_{ES-DR3} \leq P_{ES-DR3}$) and the DR3 drooping characteristic line (DR3 allotment power amount information) and transmits the DR3 allotment power amount information from communication unit 202 to central control device 7.

Control unit 203 may further parcel out the GF capacity to thermal power generator 1 and DR application 3 storage battery group in accordance with the ratio (fixed value) of parceling out the GF capacity to thermal power generator 1 and the DR application 3 storage battery group. In this case, different DR3 drooping characteristic lines result according to the ratio.

The operations are next described.

The execution operation of DR application 1 (demand reduction) is first described.

The operation by which central control device 7 derives the total adjustable capacity $P_{ES-DR1}$ (hereinbelow referred to as the "$P_{ES-DR1}$ derivation operation") on the basis of the SOC of storage batteries 9 that are to be controlled of DR application 1 will first be described. The derivation of the total adjustable capacity $P_{ES-DR1}$ requires information such as the rated output $P(n)$ of storage batteries 9 that are to be controlled of DR application 1 (for example, the number of kW that is the output of a power conditioner, the number of kWh that is to be taken as the storage battery capacity of the batteries, and the range of usable SOC, such as a range of from 30% to 90%). Because this information is basically static information, central control device 7 is assumed to have obtained this information from each apparatus control device 8 in advance in the present example embodiment.

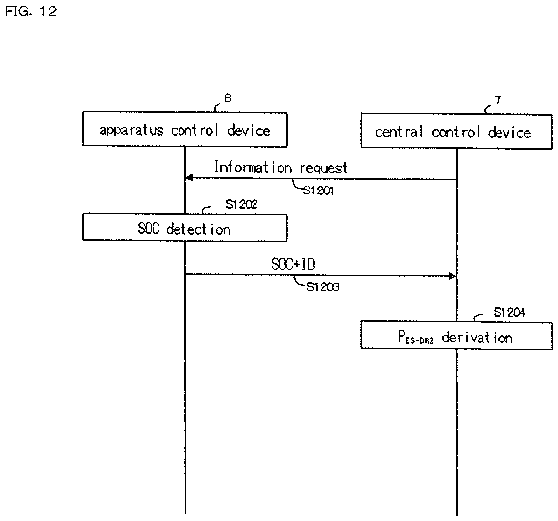

FIG. 12 is a sequence diagram for describing the $P_{ES-DR1}$ derivation operation. In FIG. 12, the number of apparatus control devices 8 that accommodate DR application 1 is assumed to be "1" in the interest of simplifying the explanation.

Communication unit 701 of central control device 7 transmits to each apparatus control device 8 that accommodates DR application 1 an information request indicating a request for the SOC (Step S1201).

Control unit 804 in each apparatus control device 8, having received by way of communication unit 802 the information request indicating that the SOC is requested, causes detection unit 801 to detect the SOC of batteries 9 that are the objects of control of DR application 1 (Step S1202). Control unit 804 next transmits the SOC that was detected by detection unit 801 together with the ID from communication unit 802 to central control device 7 (Step S1203). The ID is hereinbelow described as a sequential number $(n)$ from "1" to "N."

Central control device 7, upon receiving the SOC to which the ID is appended (hereinbelow referred to as "SOC(n)") from each apparatus control device 8 that accommodates DR application 1, derives the total adjustable capacity $P_{ES-DR1}$ (Step S1204).

Central control device 7 and each apparatus control device 8 that accommodates DR application 1 repeat the operation of Steps S1201-1204 (the $P_{ES-DR1}$ derivation operation) at a period TA1. Period TA1 that corresponds to this instance of DR application 1 is equal to the execution time of demand reduction and is, for example, one hour. Period TA1 may also be an irregular period within a range that satisfies the required conditions of the demand depending on the circumstances of the communication network, the state of failure of storage batteries, or other circumstances.

The method of deriving total adjustable capacity $P_{ES-DR1}$ is next described.

Communication unit 701 of central control device 7 collects SOC(n) at period TA1 from each apparatus control device 8 that accommodates DR application 1.

Comprehension unit 703 next uses SOC(n) and storage battery distribution ratio curves 202a and 202b in database 702 to derive, for each battery 9 that is the object of control of DR application 1, the storage battery distribution ratio $\alpha_{discharging}(n)$ at the time of discharging and the storage battery distribution ratio $\alpha_{charging}(n)$ at the time of charging. In the present example embodiment, storage battery distribution ratio curves 202a and 202b assume the curves shown in FIGs. 10A and 10B as a basis and use different curves according to information relating to the execution time required by DR application 1 and information such as the rated output P(n) of storage batteries 9 that are the objects of control (the number of kW that is the output of the power conditioner and the number of kWh the batteries have as the storage battery capacity). For example, in the present example embodiment, a curve is used by which the total adjustable capacity $P_{ES-DR1}$ that is derived by means of the process described hereinbelow is a value that is considered to enable continuous charging/discharging at least during the interval of period TA1 (in this instance, equal to the execution time required by DR application 1). The storage battery distribution ratio curve is not limited to the curve described here and can be altered as appropriate according to the demand and the DR application.

Comprehension unit 703 next uses the storage battery distribution ratio $\alpha_{discharging}(n)$ at the time of discharging and the storage battery distribution ratio $\alpha_{charging}(n)$ at the time of charging, the rated output P(n) of each of the total of N of batteries 9 that are the objects of control of DR application 1 in database 702, and the equations shown in Numerical Expression 1 and Numerical Expression 2 to derive $P_{ES, discharging}$ and $P_{ES, charging}$.

Numerical Expression 1

$$P_{ES,discharging} = \sum_{n=1}^{N} \alpha_{discharging}(n) \cdot P(n)$$

Numerical Expression 2

$$P_{ES,charging} = \sum_{n=1}^{N} \alpha_{charging}(n) \cdot P(n)$$

Comprehension unit 703 next takes the smaller value of $P_{ES, discharging}$ and $P_{ES, charging}$ as the total adjustable capacity $P_{ES-DR1}$.

However, because DR application 1 is a process corresponding to a demand reduction demand, comprehension unit 703 calculates $P_{ES, discharging}$ without calculating $P_{ES, charging}$ and takes $P_{ES, discharging}$ as the total adjustable capacity $P_{ES-DR1}$.

In addition, comprehension unit 703 adopts the method of taking the smaller value of $P_{ES, discharging}$ and $P_{ES, charging}$ as the total adjustable capacity $P_{ES-DR1}$ at the time of deriving the total adjustable capacity $P_{ES-DR2}$ and total adjustable capacity $P_{ES-DR3}$ that will be explained later.

The operation in which central control device 7 communicates with load dispatching unit 2 to comprehend DR1 allotment power amount information (hereinbelow referred to as the "DR1 comprehension operation") is next described.

Immediately before implementing DR application 1, comprehension unit 703 transmits the most recent total adjustable capacity $P_{ES-DR1}$ from communication unit 701 to load dispatching unit 2. Communication unit 202 of load dispatching unit 2, having received the total adjustable capacity $P_{ES-DR1}$, supplies the total adjustable capacity $P_{ES-DR1}$ to control unit 203.

Upon receiving the total adjustable capacity $P_{ES-DR1}$, control unit 203 assigns, of the demand reduction amount that is required by the entire power grid, a portion equal to or less than the total adjustable capacity $P_{ES-DR1}$ to the storage battery group of DR application 1 as the DR1 allotment power amount.

Control unit 203 next transmits DR1 allotment power amount information that shows the DR1 allotment power amount from communication unit 202 to central control device 7.

Comprehension unit 703 of central control device 7 receives the DR1 allotment power amount information that shows the DR1 allotment power amount that reflects the total adjustable capacity $P_{ES-DR1}$ from load dispatching unit 2 by way of communication unit 701.

Comprehension unit 703 next supplies the DR1 allotment power amount information to control unit 704.

Upon receiving the DR1 allotment power amount information, control unit 704 generates DR1 allotment information on the basis of the DR1 allotment power amount.

In the present example embodiment, control unit 704 generates the value [DR1 allotment power amount] / [total adjustable capacity $P_{ES-DR1}$] as the DR1 allotment information.

Control unit next transmits the DR1 allotment information from communication unit 701 to each of apparatus control devices 8 that have been assigned to DR application 1. The DR1 allotment information is an example of the operation control information of DR application 1.

Before transmitting the DR1 allotment information, control unit 704 transmits execution interval information IA that indicates operation period TA2 to each apparatus control device 8 that has been assigned to DR application 1 by way of communication unit 701. Operation period TA2 is, for example, ten seconds.

In each of apparatus control devices 8 that have been assigned to DR application 1, control unit 804, having received the DR1 allotment information and execution interval information IA by way of communication unit 802, causes storage batteries 9 to execute discharging power of a value obtained by multiplying the rated output by the DR1 allotment information at the operation period of TA2.

The execution operation of DR application 2 (LFC) is next described.

A summary of the execution operation of DR application 2 is first described.

(1) Central control device 7 receives the SOC of storage batteries 9 that are the objects of control of DR application 2 from the apparatus control devices 8 that have been assigned to DR application 2 at a period TB1 and collects the SOC of storage batteries 9 that are the object of control of DR application 2. Period TB1 is on the order of 15 minutes.

(2) For each collection of the SOC of storage batteries 9 that are the objects of control of DR application 2, central control device 7 derives the total adjustable capacity $P_{ES-DR2}$ on the basis of the SOC of the storage batteries 9 that are the objects of control of DR application 2.

(3) Central control device 7 next transmits the total adjustable capacity $P_{ES-DR2}$ to load dispatching unit 2 at a period $T_m$. Period $T_m$ is equal to or greater than period TB1 and is, for example, 15 minutes.

(4) Load dispatching unit 2, with each reception of the total adjustable capacity $P_{ES-DR2}$, calculates the LFC assignment capacity $LFC_{ES-DR2}$ (where $LFC_{ES-DR2} \leq P_{ES-DR2}$) for the storage battery 9 group of DR application 2.

(5) Load dispatching unit 2, for each calculation of LFC assignment capacity $LFC_{ES-DR2}$, uses the LFC assignment capacity $LFC_{ES-DR2}$ and the maximum value $\Delta f_{max}$ of the integrated value of frequency deviation to create a DR2 charging/discharging gain line. Load dispatching unit 2 then transmits the DR2 charging/discharging gain line to central control device 7.

(6) Central control device 7 calculates DR2 allotment coefficient K in accordance with the most recent DR2 charging/discharging gain line from load dispatching unit 2.

(7) Central control device 7 next transmits the DR2 allotment information (DR2 allotment coefficient K and the maximum value $\Delta f_{max}$ of the integrated value of frequency deviation) to each apparatus control device 8 that has been assigned to DR application 2 at period TB 1.

(8) Each apparatus control device 8 that has been assigned to DR application 2 calculates a local charging/discharging gain line that stipulates the charging/discharging operation of storage battery 9 group of DR application 2 on the basis of the DR2 allotment coefficient K and the maximum value $\Delta f_{max}$ of the integrated value of frequency deviation. The local charging/discharging gain line will be described later.

(9) Each apparatus control device 8 that has been assigned to DR application 2 uses the local charging/discharging gain line and grid frequency to control the charging/discharging operation of batteries 9 that are the objects of control of DR application 2.

Details of the execution operation of DR application 2 are next described.

The operation in which central control device 7 derives the total adjustable capacity $P_{ES-DR2}$ (hereinbelow referred to as the "$P_{ES-DR2}$ derivation operation") on the basis of the SOC of storage batteries 9 that are the objects of control of DR application 2 is first described.

The explanation of this $P_{ES-DR2}$ derivation operation is realized by changing the readings of the above-described $P_{ES-DR1}$ derivation operation as shown below.

"DR application 1" is to be read as "DR application 2."

"$_{DR1}$" is to be read as "$_{DR2}$."

"Period TA1" is to be read as "period TB1."

The operation in which central control device 7 communicates with load dispatching unit 2 to comprehend the DR2 charging/discharging gain line (hereinbelow referred to as the "DR2 comprehension operation") is next described.

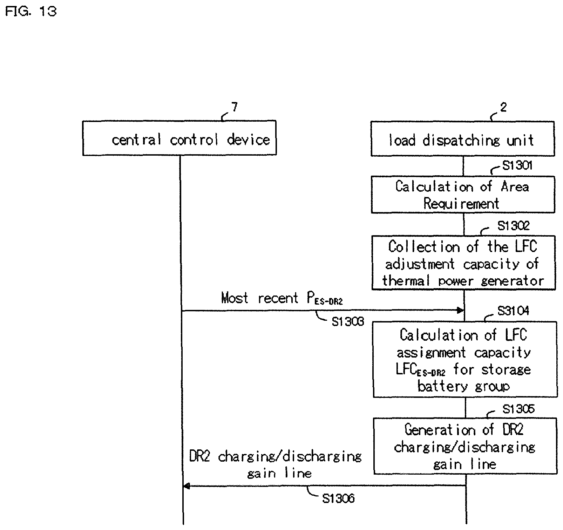

FIG. 13 is a sequence diagram for describing the DR2 comprehension operation.

Control unit 203 of load dispatching unit 2 uses the grid frequency that was detected by frequency gauge 201 to calculate the area requirement AR (Step S1301).

Control unit 203 next collects the LFC adjustment capacity of thermal power generator 1 from the thermal power generator control unit (not shown)(Step S1302).

On the other hand, communication unit 701 of central control device 7 transmits the most recent total adjustable capacity $P_{ES-DR2}$ to load dispatching unit 2 (Step S1303).

Communication unit 202 of load dispatching unit 2 receives the most recent total adjustable capacity $P_{ES-DR2}$ that was transmitted from communication unit 701 of central control device 7. Communication unit 202 supplies this most recent total adjustable capacity $P_{ES-DR2}$ to control unit 203.

Control unit 203, upon receiving the most recent total adjustable capacity $P_{ES-DR2}$, uses the area requirement AR, the LFC adjustment capacity of thermal power generator 1, and the most recent total adjustable capacity $P_{ES-DR2}$ to derive the LFC capacity. Control unit 203 next assigns to thermal power generator 1, of the LFC capacity, the capacity from which the rapid fluctuation component has been removed. Control unit 203 then assigns the remaining LFC capacity $LFC_{ES-DR2}$ (where $LFC_{ES-DR2} \leq P_{ES-DR2}$) to the DR application 2 storage battery group as the LFC assignment capacity $LFC_{ES-DR2}$ (Step S1304).

Control unit 203 determines the ratio of the assignment of the LFC capacity to thermal power generator 1 and the assignment of the LFC capacity (the LFC assignment capacity $LFC_{ES-DR2}$) to the DR application 2 storage battery group with consideration given to the viewpoint of economy while also taking into consideration the assigned portion of the EDC (Economic Load Dispatching Control) component.

Control unit 203 next generates a DR2 charging/discharging gain line (see FIG. 11A) that represents the LFC assignment capacity $LFC_{ES-DR2}$ and the maximum value $\Delta f_{max}$ of the integrated value of the frequency deviation that has been determined in advance (Step S1305). The DR2 charging/discharging gain line shown in FIG. 11A represents the charging/discharging amount of the DR application 2 storage battery group with respect to the integrated value $\Delta f$ of frequency deviation. The DR2 charging/discharging gain line changes by becoming line 400A and then becoming line 400B according to the size of the LFC assignment capacity $LFC_{ES-DR2}$ ($LFC_{ES}$ and $LFC_{ES}'$) within the range of "LFC assignment capacity $LFC_{ES-DR2} \leq$ total adjustable capacity $P_{ES-DR2}$."

Control unit 203 next transmits the DR2 charging/discharging gain line from communication unit 202 to central control device 7 (Step S1306).

Central control device 7 and load dispatching unit 2 repeat the operation of Steps S1301-S1306 (the DR2 comprehension operation) at period $T_m$ (where, for example, $T_m$ = 15 minutes). Comprehension unit 703 of central control device 7 goes on receiving the DR2 charging/discharging gain line by way of communication unit 701 and holds the most recent charging/discharging gain line among the DR2 charging/discharging gain lines.

The generation of DR2 allotment information, the transmission of the DR2 allotment information to each of apparatus control devices 8, and the operation by which each apparatus control device 8 derives local charging/discharging gain line for controlling the operation of batteries 9 that are the objects of control of DR application 2 on the basis of DR2 allotment information (hereinbelow referred to as the "DR2 allotment operations") are next described.

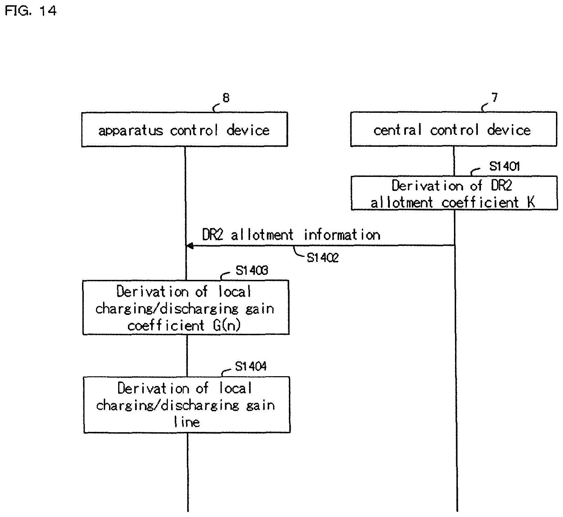

FIG. 14 is a sequence diagram for describing the DR2 allotment operation. In FIG. 14, the number of apparatus control devices 8 that have been assigned to DR application 2 is assumed to be "1" in the interest of simplifying the explanation.

Control unit 704 of central control device 7 uses the LFC assignment capacity $LFC_{ES-DR2}$ indicated in the most recent charging/discharging gain line, the most recent total adjustable capacity $P_{ES-DR2}$, and the equation shown in Numerical Expression 3 to derive the DR2 allotment coefficient K (Step S1401).

Numerical Expression 3

$$K = \frac{LFC_{ES-DR2}}{P_{ES-DR2}}$$

Control unit 704 next transmits DR2 allotment information that indicates the DR2 allotment coefficient K and the maximum value $\Delta f_{max}$ of the integrated value of the frequency deviation that is indicated in the most recent DR2 charging/discharging gain line from communication unit 701 to each apparatus control device 8 that has been assigned to DR application 2 (Step S1402). Although Numerical Expression 3 was used as the DR2 allotment coefficient K in the present example embodiment, flexible operation is possible such as, when under pressure, instructing individual storage batteries to forcibly supply output close to the limit as the value of DR2 allotment coefficient K.

In the present example embodiment, the following process is executed in Step S1402.

For each battery 9 that is the object of control of DR application 2, control unit 704 specifies as the storage battery distribution ratio $\alpha(n)$ the smaller value of the most recent storage battery distribution ratio $\alpha_{discharging}(n)$ at the time of discharging and storage battery distribution ratio $\alpha_{charging}(n)$ at the time of charging that were derived by comprehension unit 703.

Control unit 704 then generates for each battery 9 that is the object of control of DR application 2 operation-relevant information that represents the storage battery distribution ratio $\alpha(n)$ and the rated output P(n) that is being held in database 702.

Control unit 704 then appends each item of operation-relevant information to the DR2 allotment information.

Control unit 704 next transmits the DR2 allotment information to which the operation-relevant information has been appended to apparatus control devices 8 that correspond to the operation-relevant information from communication unit 701. The DR2 allotment information to which the operation-relevant information has been appended is an example of the operation control information of DR application 2.

In each apparatus control device 8 that has been assigned to DR application 2, control unit 804 receives the DR2 allotment information to which the operation-relevant information has been appended by way of communication unit 802.

Control unit 804 uses the DR2 allotment information to which the operation-relevant information has been appended and the equation shown in Numerical Expression 4 to derive the local charging/discharging gain coefficient G(n) (Step S1403).

## Numerical Expression 4

$$G(n) = \frac{K \cdot \alpha(n) \cdot P(n)}{\Delta f_{max}}$$

The values in the equation of Numerical Expression 4 are shown in the DR2 allotment information to which the operation-relevant information has been appended.

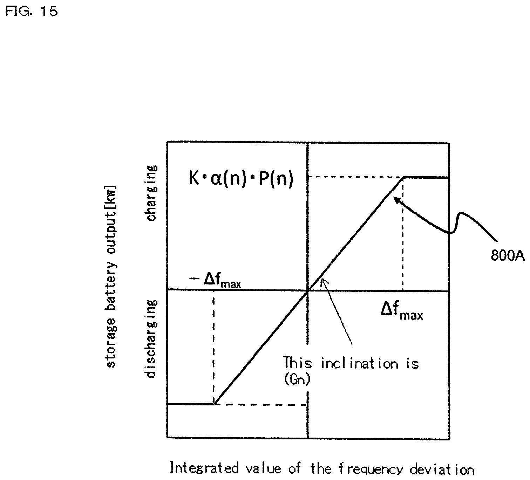

Control unit 804 next uses the local charging/discharging gain coefficient G(n) and the maximum value $\Delta f_{max}$ of the integrated value of frequency deviation shown in the DR2 allotment information to which the operation-relevant information has been appended to derive local charging/discharging gain line 800A shown in FIG. 15 (Step S1404).

Local charging/discharging gain line 800A shown in FIG. 15 is a straight line that passes through the origin 0 and that has an inclination that is the local charging/discharging gain coefficient G(n) in the range in which the integrated value $\Delta f$ of frequency deviation is $-\Delta f_{max} \leq \Delta f \leq \Delta f_{max}$. In addition, local charging/discharging gain line 800A takes the fixed value "$-K \cdot \alpha(n) \cdot P(n)$" (where the minus sign indicates discharging) in the range in which the integrated value $\Delta f$ of frequency deviation is $\Delta f < -\Delta f_{max}$. In addition, local charging/discharging gain line 800A takes the fixed value "$K \cdot \alpha(n) \cdot P(n)$" in the range in which the integrated value $\Delta f$ of frequency deviation is $\Delta f_{max} < \Delta f$.

Central control device 7 and each apparatus control device 8 that has been assigned to DR application 2 repeat Steps S1401-S1404 at period TB1 (where TB1 is, for example, 15 minutes). In each apparatus control device 8 that has been assigned to DR application 2, control unit 804 goes on receiving the DR2 allotment information to which the operation-relevant information has been appended by way of communication unit 802, and holds, of the DR2 allotment information to which the operation-relevant information has been appended, the most recent DR2 allotment information to which the operation-relevant information has been appended.

The operation is next described in which apparatus control devices 8 that have been assigned to DR application 2 control the charging/discharging of batteries 9 that are the objects of control of DR application 2 on the basis of the DR2 allotment information to which the operation-relevant information has been appended and the grid frequency (hereinbelow referred to as the "DR2 charging/discharging control operation").

At the starting time of DR application 2, control unit 704 of central control device 7 transmits execution interval information IB that indicates the operation period TB2 to apparatus control devices 8 that have been assigned to DR application 2 by way of communication unit 701. Operation period TB2 is, for example, 1 second. Upon receiving the execution interval information IB by way of communication unit 802, control unit 804 of apparatus control devices 8 that have been assigned to DR application 2 holds the execution interval information IB.

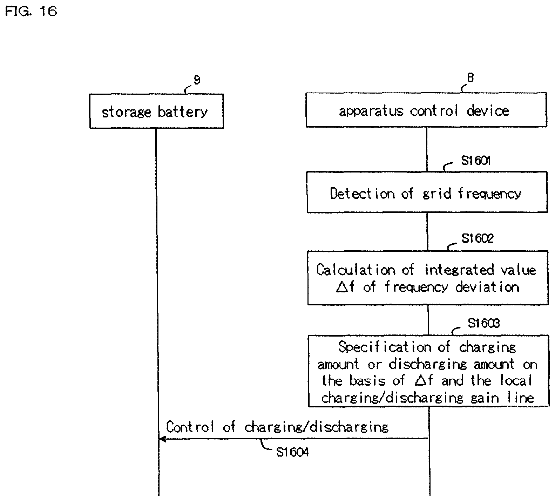

FIG. 16 is a sequence diagram for describing the charging/discharging control operation.

In apparatus control devices 8 that have been assigned to DR application 2, control unit 804 causes frequency gauge 803 to detect the grid frequency (Step S1601).

Control unit 804 next subtracts the standard frequency of the grid frequency from the detection result of frequency gauge 803 and then integrates this subtraction result to calculate the integrated value $\Delta f$ of the frequency deviation (Step S1602).

Control unit 804 next calculates the charging amount or discharging amount of batteries 9 that are the objects of control of DR application 2 in accordance with the integrated value $\Delta f$ of the frequency deviation and the local charging/discharging gain line (Step S1603).

When the absolute value of the integrated value $\Delta f$ of the frequency deviation is equal to or less than the maximum value (threshold value) $\Delta f_{max}$ of the integrated value of the frequency deviation in Step S1603, control unit 804 calculates the absolute value of a value $(G(n) \cdot \Delta f)$ obtained by multiplying the local charging/discharging gain coefficient $G(n)$ by the integrated value $\Delta f$ of the frequency deviation as the adjustment power amount.

On the other hand, when the absolute value of the integrated value $\Delta f$ of the frequency deviation is greater than the maximum value $\Delta f_{max}$ of the integrated value of the frequency deviation, control unit 804 calculates a value $(K \cdot \alpha(n) \cdot P(n))$ obtained by multiplying the allotment coefficient $K$, the storage battery distribution ratio $\alpha(n)$, and the rated output $P(n)$ together as the adjustment power amount.

In this example, a case of point symmetry is shown in which the inclination $G(n)$ on the charging side and discharging side in FIG. 15 is the same, but in actuality, a case lacking point symmetry can also be supposed, and in such a case as well, $G(n)$ is determined by the same approach. When the integrated value $\Delta f$ of the frequency deviation is a positive value, control unit 804 next causes execution of the charging operation of batteries 9 that are the objects of control of DR application 2 by the adjustment power amount. Alternatively, when the integrated value $\Delta f$ of the frequency deviation is a negative value, control unit 804 causes a discharging operation of batteries 9 that are the objects of control of DR application 2 by the adjustment power amount (Step S1604).

Each apparatus control device 8 repeats Steps S1601-1604 at period TB2 (for example, TB2 = 1 second) that is indicated in execution interval information IB. As a result, the value of the integrated value of the frequency deviation is changing each time, and with each instance, charging/discharging is effected in accordance with $G(n) \cdot \Delta f$.

The DR application 3 (GF) execution operation is next described.

A summary of the operation of executing DR application 3 is first described.

(1) Central control device 7 receives the SOC of batteries 9 that are the objects of control of DR application 3 at period TC1 from apparatus control devices 8 that have been assigned to DR application 3 and collects the SOC of batteries 9 that are the objects of control of DR application 3. Period TC1 is on the order of 5 minutes.

(2) With each collection of the SOC of batteries 9 that are the objects of control of DR application 3, central control device 7 derives the total adjustable capacity $P_{ES-DR3}$ on the basis of the SOC of batteries 9 that are the objects of control of DR application 3.

(3) Central control device 7 next transmits the total adjustable capacity $P_{ES-DR3}$ to load dispatching unit 2 at period $T_m$. Period $T_m$ is equal to or greater than period TC1 and is, for example, 15 minutes.

(4) With each reception of the total adjustable capacity $P_{ES-DR3}$, load dispatching unit 2 calculates the GF assignment component $GF_{ES-DR3}$ (where $GF_{ES-DR3} \leq P_{ES-DR3}$) for the battery 9 group that is the object of control of DR application 3.

(5) With each calculation of GF assignment capacity $GF_{ES-DR3}$, load dispatching unit 2 uses the GF assignment capacity $GF_{ES-DR3}$ and the maximum value $f_{max}$ of the frequency deviation to create a DR3 drooping characteristic line. Load dispatching unit 2 then transmits the DR3 drooping characteristic line to central control device 7.

(6) Central control device 7 calculates the DR3 allotment coefficient $K$ in accordance with the most recent DR3 drooping characteristic line from load dispatching unit 2.

(7) Central control device 7 next transmits the DR3 allotment information (the DR3 allotment coefficient $K$ and the maximum value $f_{max}$ of the frequency deviation) to each apparatus control device 8 that has been assigned to DR application 3 at period TC1.

(8) Each apparatus control device 8 that has been assigned to DR application 3 calculates a local drooping characteristic line that stipulates the charging/discharging operation of batteries 9 that are the objects of control of DR application 3 on the basis of the DR3 allotment coefficient $K$ and the maximum value $f_{max}$ of the frequency deviation. The local drooping characteristic line will be described later.

(9) Each apparatus control device 8 that has been assigned to DR application 3 uses the local drooping characteristic line and grid frequency to control the charging/discharging operation of batteries 9 that are the objects of control of DR application 3.

The operation in which central control device 7 derives the total adjustable capacity $P_{ES-DR3}$ on the basis of the SOC of batteries 9 that are the objects of control of DR application 3 (hereinbelow referred to as the "$P_{ES-DR3}$ derivation operation") is first described.

The explanation of this $P_{ES-DR3}$ derivation operation is realized by changing the readings of the explanation of the above-described $P_{ES-DR1}$ derivation operation as shown below.

"DR application 1" is to be read as "DR application 3."

"$_{DR1}$" is to be read as "$_{DR3}$."

"Period TA1" is to be read as "period TC1."

The operation in which central control device 7 communicates with load dispatching unit 2 to comprehend the DR3 drooping characteristic line (hereinbelow referred to as the "DR3 comprehension operation") is next described.

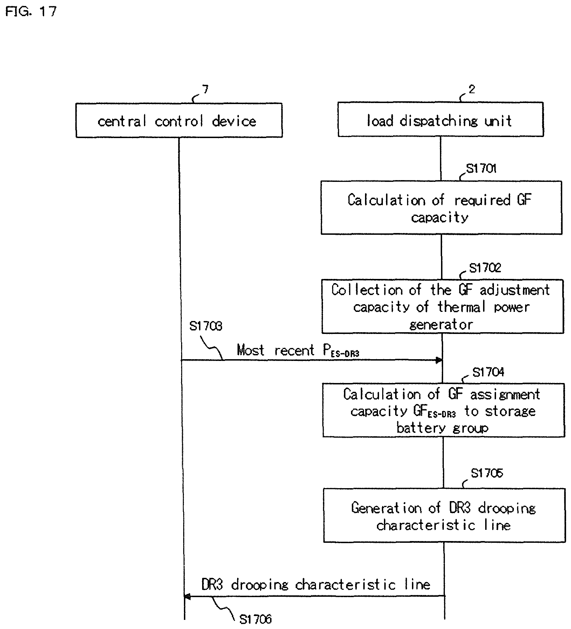

FIG. 17 is a sequence diagram for describing the DR3 comprehension operation.

Control unit 203 of load dispatching unit 2 calculates the required GF capacity in the area on the basis of the estimated generation amount of solar power generation, the estimated generation amount of wind power generation, and the estimated power demand (Step S1701).

Control unit 203 next collects the GF adjustment capacity of thermal power generator 1 from the thermal power generator control unit (not shown) (Step S1702).

On the other hand, communication unit 701 of central control device 7 transmits the most recent total adjustable capacity $P_{ES-DR3}$ to load dispatching unit 2 (Step S1703).

Communication unit 202 of load dispatching unit 2 receives the most recent total adjustable capacity $P_{ES-DR3}$ that was transmitted from communication unit 701 of central control device 7. Communication unit 202 supplies this most recent total adjustable capacity $P_{ES-DR3}$ to control unit 203.

Control unit 203, having received the most recent total adjustable capacity $P_{ES-DR3}$, uses the GF adjustment capacity of thermal power generator 1 and the most recent total adjustable capacity $P_{ES-DR3}$ to assign to thermal power generator 1 a portion of the required GF capacity according to, of the capacity that thermal power generator 1 can bear, the capacity that thermal power generator 1 can efficiently bear based on an estimate of the operating conditions of the generator. Control unit 203 then assigns, to the DR application 3 storage battery group, the remaining GF capacity $GF_{ES-DR3}$ (where $GF_{ES-DR3} \leq P_{ES-DR3}$) as the GF assignment capacity $GF_{ES-DR3}$ (Step S1704).

Control unit 203 next generates a DR3 drooping characteristic line (see FIG. 11B) that represents the GF assignment capacity $GF_{ES-DR3}$ and the maximum value $f_{max}$ of the frequency deviation that was determined beforehand (Step S1705).

The DR3 drooping characteristic line shown in FIG. 11B represents the charging/discharging amount of the DR application 3 storage battery group with respect to frequency deviation $\Delta f$. The DR3 drooping characteristic line changes in inclination according to the size of the GF assignment capacity $GF_{ES-DR3}$ (assignment ratio) in the range in which "GF assignment capacity $GF_{ES-DR3} \leq$ total adjustable capacity $P_{ES-DR3}$."

Control unit 203 next transmits the DR3 drooping characteristic line from communication unit 202 to central control device 7 (Step S1706).

Central control device 7 and load dispatching unit 2 repeat the operation of Steps S1701-S1706 (the DR3 comprehension operation) at period $T_m$ (where T is, for example, 15 minutes). Further, comprehension unit 703 of central control device 7 goes on receiving the DR3 drooping characteristic line by way of communication unit 701 and holds, of the DR3 drooping characteristic line, the most recent drooping characteristic line.

The generation of DR3 allotment information, the transmission of the DR3 allotment information to each apparatus control device 8, and the operation by which each apparatus control device 8 derives the local drooping characteristic line for controlling the operation of batteries 9 that are the objects of control of DR application 3 on the basis of the DR3 allotment information (hereinbelow referred to as the "DR3 allotment operations") are next described.

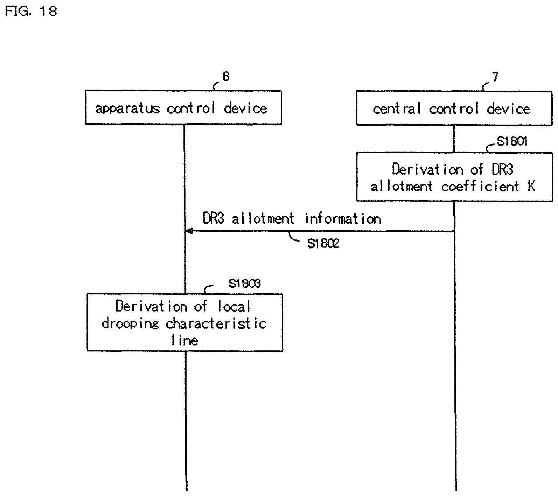

FIG. 18 is a sequence diagram for describing the DR3 allotment operation. In FIG. 18, the number of apparatus control devices 8 that have been assigned to DR application 3 is assumed to be "1" in the interest of simplifying the explanation.

Control unit 704 of central control device 7 uses the GF assignment capacity $GF_{ES-DR3}$ that is indicated in the most recent drooping characteristic line, the most recent total adjustable capacity $P_{ES-DR3}$, and the equation shown in Numerical Expression 5 to derive the DR3 allotment coefficient K (Step S1801).

## Numerical Expression 5

$$K = ( GF_{ES-DR3} ) / ( P_{ES-DR3} )$$

Control unit 704 next transmits the DR3 allotment information that indicates the DR3 allotment coefficient K and the maximum value $f_{max}$ of the frequency deviation indicated in the most recent DR3 drooping characteristic line from communication unit 701 to each apparatus control device 8 that has been assigned to DR application 3 (Step S1802). Although Numerical Expression 5 is used as DR3 allotment coefficient K in the present example embodiment, flexible operation is also possible such as, when under pressure, instructing individual storage batteries to forcibly supply output close to the limit as DR3 allotment coefficient K.

In the present example embodiment, the following process is executed in Step S1802.

For each storage battery 9 that is the object of control of DR application 3, control unit 704 specifies, as the storage battery distribution ratio $\alpha(n)$, the smaller value of the most recent storage battery distribution ratio $\alpha_{discharging}(n)$ at the time of discharging and storage battery distribution ratio $\alpha_{charging}(n)$ at the time of charging that were derived by comprehension unit 703.

Control unit 704 next generates operation-relevant information that shows, for each of batteries 9 that are the objects of control of DR application 3, the storage battery distribution ratio $\alpha(n)$ and the rated output P(n) that is held in database 702.

Control unit 704 next appends the DR3 allotment information to each item of operation-relevant information.

Control unit 704 then transmits the DR3 allotment information to which the operation-relevant information has been appended from communication unit 701 to apparatus control devices 8 that correspond to the operation-relevant information. The DR3 allotment information to which the operation-relevant information has been appended is an example of the operation control information of DR application 3.

In each apparatus control device 8 that has been assigned to DR application 3, control unit 804 receives by way of communication unit 802 the DR3 allotment information to which the operation-relevant information has been appended.

Control unit 804 uses the maximum value $f_{max}$ of the frequency deviation shown in the DR3 allotment information to which the operation-relevant information has been appended and the equation shown in Numerical Expression 6 to derive the local drooping characteristic line (Step S1803).

<p align="center">Numerical Expression 6</p>

$$GF(n)=K\cdot \alpha(n)\cdot P(n)$$

The values in the equation of Numerical Expression 6 are shown in the DR3 allotment information to which the operation-relevant information has been appended.

Local drooping characteristic line 400C shown in FIG. 11B is a straight line that passes through the origin (0[kW], $f_0$=50Hz) and the inclination is determined by GF(n) and $f_{max}$ in the range in which the frequency deviation $\Delta f$ is $-f_{max} \leq \Delta f \leq +f_{max}$. In addition, local drooping characteristic line 400C takes the fixed value "-K $\cdot$ $\alpha(n)$ $\cdot$ P(n)" (where the minus sign represents discharging) in the range in which the frequency deviation $\Delta f$ is $\Delta f < -f_{max}$. Local drooping characteristic line 400C further takes the fixed value "K$\cdot \alpha(n)\cdot$P(n)" in the range in which the frequency deviation $\Delta f$ is $+f_{max} < \Delta f$.

Central control device 7 and each apparatus control device 8 that has been assigned to DR application 3 repeat Steps S1801-S1803 at period TC1 (where TC1 is, for example, 5 minutes). In each apparatus control device 8 that has been assigned to DR application 3, control unit 804 goes on receiving the DR3 allotment information to which the operation-relevant information has been appended by way of communication unit 802, and holds, of the DR3 allotment information to which the operation-relevant information has been appended, the most recent DR3 allotment information to which operation-relevant information has been appended.

The operation in which apparatus control devices 8 that have been assigned to DR application 3 use the DR3 allotment information to which the operation-relevant information has been appended and the grid frequency to control the charging/discharging of batteries 9 that are the objects of control of DR application 3 (hereinbelow referred to as the "DR3 charging/discharging control operation") is next described.

At the starting time of DR application 3, control unit 704 of central control device 7 transmits execution interval information IB that indicates operation period TC2 by way of communication unit 701 to apparatus control devices 8 that have been assigned to DR application 3. Operation period TC2 is, for example, 0.1 seconds. Control unit 804 of apparatus control devices 8 that have been assigned to DR application 3, upon receiving execution interval information IB by way of communication unit 802, holds the execution interval information IB.

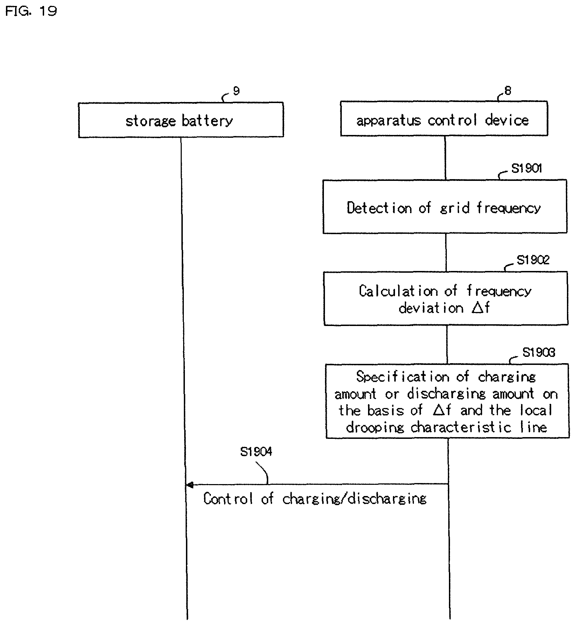

FIG. 19 is a sequence diagram for describing the charging/discharging control operation.

In apparatus control devices 8 that have been assigned to DR application 3, control unit 804 causes frequency gauge 803 to detect the grid frequency (Step S1901).

Control unit 804 next calculates the frequency deviation $\Delta f$ by subtracting the standard frequency of the grid frequency from the detection result of frequency gauge 803 (Step S1902).

Control unit 804 next calculates the charging amount or discharging amount of batteries 9 that are the objects of control of DR application 3 in accordance with the frequency deviation $\Delta f$ and the local drooping characteristic line (Step S1903).

If the absolute value of the frequency deviation $\Delta f$ is equal to or less than the maximum value (threshold value) $f_{max}$ of the frequency deviation in Step S1903, control unit 804 calculates the absolute value of a value (GF(n) • $\Delta f / f_{max}$) obtained by multiplying G(n) by the value that results from dividing the frequency deviation $\Delta f$ by $f_{max}$ as the adjustment power amount.

On the other hand, if the absolute value of the frequency deviation $\Delta f$ is greater than the maximum value $f_{max}$ of the absolute value of frequency deviation, control unit 804 calculates GF(n) as the adjustment power amount.

If the frequency deviation $\Delta f$ is a positive value, control unit 804 next causes a charging operation of the adjustment power amount in batteries 9 that are the objects of control of DR application 3. Alternatively, if the frequency deviation $\Delta f$ is a negative value, control unit 804 causes a discharging operation of the adjustment power amount in batteries 9 that are the objects of control of DR application 3 (Step S1904).

Each apparatus control device 8 repeats Steps S1901-S1904 at period TC2 indicated in execution interval information IB (where TC2 is, for example, 0.1 seconds). As a result, the value of the frequency deviation changes each time, and with each change, charging/discharging is effected according to GF(n) • $\Delta f / f_{max}$.

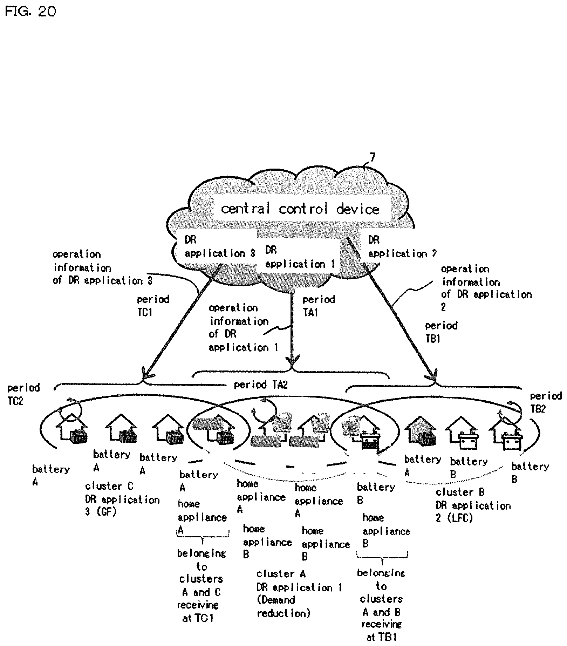

FIG. 20 shows the relation of periods TA1, TA2, TB1, TB2, TC1, and TC2.

Each of periods TA1, TA2, TB1, TB2, TC1, and TC2 are set in control unit 704 according to operation demand conditions (operation precision and reliability) that are indicated in demands. Further, each of periods TA1, TA2, TB1, TB2, TC1, and TC2 maybe set as appropriate in the aggregator.

Periods TA1, TA2, TB1, TB2, TC1, and TC2 are here described.

When executing DR applications 1, 2, and 3, control unit 704 in central control device 7, implements timely health checks for monitoring the communication state at periods shorter than periods TA1, TB1, and TC1. In order to reduce any influence of communication upon the DR application, control unit 704 preferably lengthens periods TA1, TB1, and TC1 as much as possible and makes periods TA1, TB1, and TC1 variable states (irregular intervals). As a result, control unit 704 selects the longest periods TA1, TB1, and TC1 within a range that accords with the characteristics (conditions) sought by each of DR applications 1, 2, and 3. The periods TA1, TB1, and TC1 that can be selected for each DR application have upper and lower limits that depend on the characteristics (conditions) sought by each of DR applications 1, 2, and 3. Another example of periods TA1 and TA2 of DR application 1 (demand reduction) is next described.

Period TA1 is preferably made to be an irregular interval. In the stage of determining the content of DR application 1 on the day preceding the day of executing DR application 1, control unit 704 basically reports the amount of reduction for each time to apparatus control devices 8 that accommodate DR application 1. In addition, in order to deal with unforeseen events including whether or not to implement DR application 1, control unit 704 may report to apparatus control devices 8 that accommodate DR application 1 at irregular intervals (several hours to several minutes) before the implementation of DR application 1 on the day of executing DR application 1 either the actual assignment portion of the amount of reduction, or non-implementation information in cases of non-implementation (change of DR content).

When the time comes to start DR application 1, control unit 804 of apparatus control devices 8 that accommodate DR application 1 periodically implements reporting to central control device 7 regarding the result of implementing DR application 1 at periods of, for example, five or ten minutes, periods that are the same as the measurement periods described hereinbelow, or periods that are slightly longer than this period.

Local period TA2 realized by apparatus control devices 8 is far shorter than period TA1. Control unit 704 controls period TA2 by monitoring the amount of demand in real time. Alternatively, control unit 704 monitors integral power consumption that is calculated from the measured values of power meters (not shown) of apparatus control devices 8 to control period TA2. At this time, the power integrating period (such as 5 minutes, 10 minutes, 15 minutes, and 30 minutes) may coincide with period TA2, or period TA2 may be shorter than the integrating period. Another example of periods TB1 and TB2 of DR application 2 (LFC) is next described.

The length of period TB1 depends on the state of variation of the SOC of storage batteries that are to be controlled, but for example, is assumed to be on the order of ten-odd minutes to several tens of minutes. Period TB2 is assumed to be on the order of units of seconds matching the measurement of the integrated value of the frequency deviation. Period TB2 is thus far shorter than period TB1.

Control unit 704 sets period TB1 longer (the maximum period that can guarantee control) for storage batteries 9 of customers by way of a PHS (Personal Handyphone System) that has an unstable communication state. On the other hand, control unit 704 sets period TB1 to be shorter (the period having the best stability for control) for storage batteries 9 of customers by way of 3G (3rd Generation) that has a stable communication state.

Another example of periods TC1 and TC2 of DR application 3 (GF) is next described.

When implementation is to be guaranteed for DR application 3, in some cases, control unit 704 of central control device 7 sends DR3 allotment information to each apparatus control device 8 that accommodates DR application 3, while in other cases, each apparatus control device 8 that accommodates DR application 3 determines the DR3 allotment information autonomously. After central control device 7 transmits actuation information of DR application 3 to apparatus control devices 8 that accommodate DR application 3, central control device 7 and apparatus control devices 8 that have been assigned to DR application 3 carry out two-way communication at period TC1 for the purpose of monitoring the communication state and collecting implementation circumstances. Period TC2 corresponds to the measurement period of the frequency deviation. Period TC2 is on the order of seconds or less. Period TC2 is far shorter than period TC1.

In addition, periods TA1, TB1, and TC1 satisfy the relation TA1 > TB1 > TC1.

Periods TA2, TB2, and TC2 satisfy the relation TA2 > TB2 > TC2.

The GF allotment amount may be determined in advance by the capacity (kW) of the power conditioners (PCS) (not shown) that connect to storage batteries 9 and the capacity (kWh) of storage batteries.

The effect of the present example embodiment is next described.

Control unit 704 generates operation control information and execution interval information. Communication unit 701 transmits the operation control information and execution interval information to each of apparatus control devices 8. Control unit 704 then determines at least one of the intervals from among the interval for transmitting operation control information in communication unit 701 or the interval for executing control of storage batteries 9 that accords with the most recent operation control information according to the state of apparatus control devices 8.

As a result, when, for example, control unit 704 determines the interval for transmitting operation control information according to the state of apparatus control devices 8, the interval for transmitting operation control information can be altered according to the state of apparatus control devices 8 (for example, the type of DR application that apparatus control devices 8 execute). In addition, when control unit 704 determines the interval for executing control of storage batteries 9 that accords with the most recent operation control information, the interval for executing control of storage batteries 9 that accords with the most recent operation control information can be altered according to the state of apparatus control devices 8. Accordingly, sufficient control precision and control reliability can be realized when using a storage battery group.

A modification of the present example embodiment is next described.

Each of period TA1, period TB1, and period TC1 can be altered as appropriate as long as the period differs from one other period.

Each of period TA2, period TB2, and period TC2 can be altered as appropriate as long as the period differs from one other period.

The number of DR applications carried out by central control device 7 is not limited to three and can be altered as appropriate.

In the present example embodiment, storage batteries were used as the power supply/demand adjustment devices, but the power supply/demand adjustment devices are not limited to storage batteries. For example, the power supply/demand adjustment devices may be household appliances, electric water heaters, heat pump water heaters, pumps, or electric vehicles.

In the present example embodiment, control unit 704 transmits operation control information at the same time interval to apparatus control devices 8 that execute the same DR application. However, control unit 704 may also alter the interval for transmitting operation control information for each apparatus control device 8 even when apparatus control devices 8 execute the same DR application.

For example, control unit 704 may determine for each apparatus control device 8 the interval for transmitting operation control information according to the communication characteristics of each apparatus control device 8.

Examples of the communication characteristics of apparatus control devices 8 include the communication specifications that correspond to apparatus control device 8 such as 3G, LTE (Long Term Evolution), and WiMAX (Worldwide Interoperability for Microwave Access).

For example, control unit 704 makes the interval for transmitting operation control information to apparatus control devices 8 that correspond to communication specifications for which communication quality is higher than standard values shorter than the interval for transmitting operation control information to apparatus control devices 8 that correspond to communication specifications for which the communication quality is lower than standard values.

In addition, control unit 704 may also determine, for each apparatus control device 8, the interval for transmitting operation control information according to battery characteristics (such as the response time) of the storage batteries that each apparatus control device 8 controls.

For example, control unit 704 lengthens the interval for transmitting operation control information in proportion to the length of the response time of the storage batteries that each apparatus control device 8 controls.

The response time is next described.

Response time refers to the time required from submitting an instruction to execute a process until the initial response.

For example, when an instruction to carry out a process has been received, the response time of a storage battery is the time from when the instruction was received until charging/discharging can be implemented.

Control unit 704 may determine for each apparatus control device 8 the interval for transmitting operation control information according to the communication characteristics of each apparatus control device 8 and the battery characteristics of storage batteries that are to be controlled regardless of the DR application that apparatus control device 8 executes.

In addition, in the present example embodiment, control unit 704 makes identical the interval for executing control of storage batteries 9 by apparatus control devices 8 that execute the same DR application. However, control unit 704 may change the interval for executing control of storage batteries 9 for each apparatus control device 8 even in the case of apparatus control devices 8 that execute the same DR application.

For example, control unit 704 may determine for each apparatus control device 8 the interval for executing control of storage batteries 9 according to the communication characteristics of each apparatus control device 8.

For example, control unit 704 makes the interval for executing control of storage batteries 9 by apparatus control devices 8 that correspond to communication specifications in which communication quality is higher that the standard value to be shorter than the interval for executing control of storage batteries 9 by apparatus control devices 8 that correspond to communication specifications in which communication quality is lower than standard values. Alternatively, control unit 704 may determine for each apparatus control device 8 the interval for executing control of storage batteries 9 according to the battery characteristics (such as the response time) of the storage batteries that each apparatus control device 8 controls.

For example, control unit 704 lengthens the interval for executing control of storage batteries 9 in proportion to the length of the response time of the storage batteries that each apparatus control device 8 controls.

Further, regardless of the DR application that apparatus control devices 8 execute, control unit 704 may determine for each apparatus control device 8 the interval for executing control of storage batteries 9 according to the communication characteristics of each apparatus control device 8 and the battery characteristics of the storage batteries that are to be controlled.

In addition to the above-described cases, when communication is periodically interrupted, control unit 804 may receive operation control information or may receive information that instructs the execution interval at a shorter interval in intervals in which communication is not interrupted.

In addition, each of the operation control information of DR applications 1, 2, and 3 is not limited to the above-described operation control information and can be altered as appropriate.

The interval for receiving operation control information and the interval for executing operation control at apparatus control device 8 differs from other apparatus control devices 8 according to the type of application, the communication characteristics, and the storage battery characteristics. However, the above-described reception interval and execution interval are not necessarily fixed and may change according to circumstances or changes of the above-described characteristics. In addition, the reception interval and execution interval of apparatus control device 8 may be the same as for, among other apparatus control devices 8, a portion of apparatus control devices 8. In communication that is carried out at the above-described periods TA1, TB 1, and TC 1, central control device 7 implements collection of not only operation control information but also information relating to the monitoring of communication states or the monitoring of the state of the implementation of control.

Further, when discharge (reverse power flow) from storage battery 9 (customer-side) to power grid 3 is prohibited, control unit 804 causes the discharge power of storage battery 9 to discharge within the range of the power consumption amount of load 10 of a customer. The power demand upon power grid 3 is thus reduced by the consumption of the discharge power of storage battery 9 by load 10.

When discharge (reverse power flow) from storage battery 9 (customer-side) to power grid 3 is not prohibited, control unit 804 may supply the discharge power of storage battery 9 to be supplied to power grid 3.

In the present example embodiment, control unit 804 uses the frequency deviation f that fluctuates according to the state of balance between power supply and demand and the integrated value $\Delta f$ of the frequency deviation as information for specifying the overall supply/demand adjustment amount.

However, the information for specifying the overall supply/demand adjustment amount is not limited to the frequency deviation f and the integrated value $\Delta f$ of the frequency deviation and can be altered as appropriate. For example, information that indicates the overall supply/demand adjustment amount may be used for specifying the overall supply/demand adjustment amount instead of the frequency deviation f and the integrated value $\Delta f$ of the frequency deviation. Information that indicates the overall supply/demand adjustment amount is transmitted from, for example, load dispatching unit 2. In this case, load dispatching unit 2 transmits to each apparatus control device 8 information that indicates the overall supply/demand adjustment amount by, for example, one-way communication (for example, broadcast transmission). The method of transmitting information that indicates the overall supply/demand adjustment amount is not limited to one-way communication (for example, broadcast transmission) and can be altered as appropriate.

In each apparatus control device 8, communication unit 802 receives information indicating the overall supply/demand adjustment amount and supplies the information that indicates the overall supply/demand adjustment amount to control unit 804. Control unit 804 uses the overall supply/demand adjustment amount in place of, for example, the integrated value $\Delta f$ of the frequency deviation. In this case, explanation of the power supply/demand adjustment is realized by changing the reading "integrated value $\Delta f$ of frequency deviation" to "overall supply/demand adjustment amount."

In addition, load dispatching unit 2 generates information indicating the overall supply/demand adjustment amount as shown hereinbelow.

Load dispatching unit 2 uses the grid frequency and the power flow of linking line 4 to calculate the overall supply/demand adjustment amount.

For example, when power is supplied from power grid 3 to another power grid 13 by way of linking line 4, load dispatching unit 2 multiplies a predetermined constant by a value obtained by subtracting the actual grid frequency from the standard frequency of the grid frequency. Load dispatching unit 2 next calculates the result of subtracting the power flow of linking line 4 (the power that is being supplied from power grid 3 to another power grid 13 by way of linking line 4) from this multiplication result as the overall supply/demand adjustment amount. Alternatively, when power is being supplied to power grid 3 from another power grid 13 by way of linking line 4, load dispatching unit 2 first multiplies a predetermined constant by a value obtained by subtracting the actual grid frequency from the standard frequency of the grid frequency as described above. Load dispatching unit 2 then calculates the result of adding the power flow of linking line 4 (the power that is being supplied to power grid 3 from another power grid 13 by way of linking line 4) to the multiplication result as the overall supply/demand adjustment amount.

In each of the above-described example embodiments, control device A, electrical storage device B, control assistance device C, control assistance device D, central control device 7, and apparatus control device 8 each may also be realized by a computer. In this case, a computer reads and executes programs that are recorded on a recording medium that can be read by the computer to execute the functions of control device A, electrical storage device B, control assistance device C, control assistance device D, central control device 7, and apparatus control device 8. The recording medium is, for example, a CD-ROM (Compact Disk Read Only Memory). The recording medium is not limited to a CD-ROM and can be altered as appropriate. In each of the example embodiments described hereinabove, the configurations shown in the drawings are merely examples, and the present invention is not limited to these configurations.

Although the invention of the present application has been described with reference to example embodiments, the invention of the present application is not limited to the above-described example embodiments. The configuration and details of the invention of the present application are open to various modifications within the scope of the invention of the present application that will be clear to one of ordinary skill in the art. This application claims the benefits of priority based on Japanese Patent Application No. 2014-156203 for which application was submitted on July 31, 2014 and incorporates by citation all of the disclosures of that application. Explanation of Reference Numbers

**[0350]**

A control device
A1 communication unit
A2 control unit
B electrical storage device
B1 storage battery
C, D control assistance device
C1, D 1 communication unit
C2, D2 control unit
1000 power control system
1 thermal power generator
2 load dispatching unit
201 frequency gauge
202 communication unit
203 control unit
3 power grid
4 linking line
5 distribution transformer
6 power line
7 central control device
701 communication unit
702 database
703 comprehension unit
704 control unit
8 apparatus control device
801 detection unit
802 communication unit
803 frequency gauge

804 control unit
9 storage battery
10 load
111 renewable power source (solar power generator)
112 renewable power source (wind power generator)

**Claims**

1.  A control device that controls power supply/demand adjustment devices, comprising:

    a communication unit that receives operation control information of said power supply/demand adjustment devices; and
    a control unit that executes operation control of said power supply/demand adjustment devices on the basis of operation control information that was received by said communication unit;

    wherein there is a difference, in at least one of the intervals from among the interval for receiving the operation control information and the interval for executing the operation control, between said control device that controls power supply/demand adjustment devices and other control devices that are in different states.

2.  The control device as set forth in claim 1, wherein said different state is a state in which power supply/demand adjustment processing differs.

3.  The control device as set forth in claim 2, wherein at least one of the intervals from among the interval for receiving said operation control information and the interval for executing said operation control becomes shorter with increasing precision of said power supply/demand adjustment processing.

4.  The control device as set forth in claim 1, wherein said different state is a state in which communication characteristics differ.

5.  The control device as set forth in claim 4, wherein at least one of the intervals from among the interval for receiving said operation control information and the interval for executing said operation control becomes shorter with increasing communication quality in said communication characteristics.

6.  The control device as set forth in claim 1, wherein said different state is a state in which the characteristics of said power supply/demand adjustment devices differ.

7.  The control device as set forth in claim 6, wherein at least one of the intervals from among the interval for receiving said operation control information and the interval for executing said operation control becomes shorter with shorter response times in said power supply/demand adjustment devices.

8.  The control device as set forth in claim 6, wherein at least one of the intervals from among the interval for receiving said operation control information and the interval for executing said operation control becomes shorter when variation in states relating to said power supply/demand adjustment devices is equal to or greater than a fixed value.

9.  The control device as set forth in any one of claims 1 to 8, wherein said communication unit transmits the state of said power supply/demand adjustment devices to an outside device and receives said operation control information that accords with the state of said power supply/demand adjustment devices from said outside device.

10. The control device as set forth in claim 9, wherein said control device receives the state of a power grid at a time interval that is shorter than the interval for receiving said operation control information, and on the basis of the state of the power grid and said operation control information, controls the operation of said power supply/demand adjustment devices.

11. The control device as set forth in claim 1, wherein said communication unit receives from said outside device said operation control information that was generated on the basis of the state of said power supply/demand adjustment devices and the power amount that is born by power supply/demand adjustment devices overall that are controlled

25

by N (where N is a number equal to or greater than 1) said control devices to adjust the power amount on the power grid.

12. An electrical storage device that accumulates electric power, comprising:

a battery that is connected to a power grid;
a communication unit that receives operation control information of said battery; and
a control unit that executes operation control of said battery on the basis of operation control information that is received by said communication unit;
wherein there is a difference, at least in one of the intervals from among the interval for receiving said operation control information and the interval for executing said operational control, between said electrical storage device that accumulates electric power and other electrical storage devices that are in different states.

13. A control assistance device, comprising:

a communication unit that transmits, to each of control devices that control power supply/demand adjustment devices, operation control information of said power supply/demand adjustment devices; and
a control unit that causes an interval for transmitting said operation control information by said communication unit to differ among said control devices that are in different states.

14. A control assistance device, comprising:

a communication unit that transmits, to each of control devices that control power supply/demand adjustment devices, operation control information of said power supply/demand adjustment devices and specification information that specifies the execution interval of operation control of said power supply/demand adjustment devices on the basis of said operation control information; and
a control unit that causes a difference, in at least one of the intervals from among the interval for transmitting said operation control information by the communication unit and the execution interval specified in said specification information that is transmitted from said communication unit, among the control devices that are in different states.

15. A control method that is carried out by a control device that controls power supply/demand adjustment devices, comprising:

receiving operation control information of said power supply/demand adjustment devices; and
executing operation control of said power supply/demand adjustment devices on the basis of said operation control information;
wherein there is a difference, in at least one of the intervals from among the interval for receiving said operation control information and the interval for executing said operation control,
between said control device that controls power supply/demand adjustment devices and other control devices that are in different states.

16. A control method that is carried out by an electrical storage device that accumulates power, comprising:

receiving operation control information of a battery that is connected to a power grid; and
executing operation control of said battery on the basis of said operation control information;

wherein there is a difference, in at least one of the intervals from among the interval for receiving said operation control information and the interval for executing said operational control, between said electrical storage device that accumulates power and other electrical storage devices that are in different states.

17. A control assistance method comprising:

transmitting, to each of control devices that control power supply/demand adjustment devices,
operation control information of said power supply/demand adjustment devices, wherein the interval for transmitting said operation control information is caused to differ among said control devices that are in different states.

18. A control assistance method comprising:

transmitting, to each of control devices that control power supply/demand adjustment devices, operation control information of said power supply/demand adjustment devices and specification information that specifies execution interval of operation control of said power supply/demand adjustment devices on the basis of said operation control information;

wherein at least one of the intervals from among the interval for transmitting said operation control information and the execution interval that is specified in said specification information that is transmitted from said communication unit is caused to differ among said control devices that are in different states.

19. A recording medium that can be read by a computer and on which is recorded a program for causing a computer of a device that controls power supply/demand adjustment devices to execute:

a communication procedure of receiving operation control information of said power supply/demand adjustment devices; and
a control procedure of executing operation control of said power supply/demand adjustment devices on the basis of said operation control information;

wherein there is a difference, in at least one of the intervals from among the interval for receiving said operation control information and the interval for executing said operation control, between the control device that controls power supply/demand adjustment devices and other control devices that are in different states.

20. A recording medium that can be read by a computer and on which is recorded a program for causing a computer to execute:

a communication procedure of transmitting, to each of control devices that control power supply/demand adjustment devices, operation control information of said power supply/demand adjustment devices; and
a control procedure of causing the interval for transmitting said operation control information to differ among said control devices that are in different states.

21. A recording medium that can be read by a computer and on which is recorded a program that causes a computer to execute:

a communication procedure of transmitting, to each of control devices that control power supply/demand adjustment devices, operation control information of said power supply/demand adjustment devices and specification information that specifies the execution interval of the operation control of said power supply/demand adjustment devices on the basis of said operation control information; and
a control procedure of causing at least one of the intervals from among the interval for transmitting said operation control information and the execution interval that is specified in said specification information that is transmitted from said communication unit to differ among said control devices that are in different states.

FIG. 1

```
                                              A
  ┌──────────────────────────────────────┐
  │ control device                        │
  │                                       │
  │                              A1       │
  │         ┌──────────────┐              │
  │         │ communication│              │
  │         │ unit         │              │
  │         └──────┬───────┘              │
  │                │                      │
  │                │             A2       │
  │         ┌──────┴───────┐              │
  │         │   control    │              │
  │         │   unit       │              │
  │         └──────────────┘              │
  │                                       │
  └──────────────────────────────────────┘
```

FIG. 2

```
              ┌──────────────┐
              │    START     │
              └──────┬───────┘
                     │
                     ▼                        S201
  ┌────────────────────────────────────────────┐
  │ Receive control information at an interval   │
  │ that differs from the reception interval of  │
  │ control information performed by other        │
  │ control devices                              │
  └──────────────────┬──────────────────────────┘
                     │
                     ▼                        S202
  ┌────────────────────────────────────────────┐
  │        Hold the control information          │
  └──────────────────┬──────────────────────────┘
                     │
                     ▼                        S203
  ┌────────────────────────────────────────────┐
  │ Execute operation control of storage         │
  │ batteries on the basis of control            │
  │ information to carry out power supply/        │
  │ demand adjustment processing                 │
  └──────────────────┬──────────────────────────┘
                     │
                     ▼
              ┌──────────────┐
              │     END      │
              └──────────────┘
```

FIG. 3

**B**

electrical storage device

**A1**
communication unit

**A2**
control unit

**B1**
storage battery

FIG. 4

C

control assistance device

C1

communication
unit

C2

control
unit

FIG. 5

START

S501

Cause the transmission interval of control
information to differ among a plurality of
control devices of differing states

END

FIG. 6

```
                                        ⌐ D
  ┌─────────────────────────────────┐
  │ control assistance device       │
  │                                 │
  │                          ⌐ D1   │
  │          ┌───────────────┐      │
  │          │ communication │      │
  │          │ unit          │      │
  │          └───────┬───────┘      │
  │                  │              │
  │                  │       ⌐ D2   │
  │          ┌───────┴───────┐      │
  │          │ control       │      │
  │          │ unit          │      │
  │          └───────────────┘      │
  │                                 │
  └─────────────────────────────────┘
```

FIG. 7

```
              ┌──────────────┐
              │    SATRT     │
              └──────┬───────┘
                     │                    ⌐ S701
  ┌──────────────────┴──────────────────────┐
  │ Cause execution interval that is specified in │
  │ specification information to differ among a   │
  │ plurality of control devices of differing states │
  └──────────────────┬──────────────────────┘
                     │                    ⌐ S702
  ┌──────────────────┴──────────────────────┐
  │ Cause the transmission interval of control   │
  │ information to differ among a plurality of   │
  │ control devices of differing states          │
  └──────────────────┬──────────────────────┘
                     │
              ┌──────┴───────┐
              │     END      │
              └──────────────┘
```

FIG. 8

1000 power control system

central
control
device
7

13
another
power
system

12
communication
network

8
apparatus
control
device

storage
battery
9

load
10

customer-side

4 linking line

8
apparatus
control
device

storage
battery
9

load
10

customer-side

1
thermal
power
generator

2
load
dispatching
unit

distribution
transformer
5

6 power line

3 power grid

111
renewable power source
(solar power generator)

112
renewable power source
(wind power generator)

EP 3 197 010 A1

FIG. 9

apparatus control device ⌐8

apparatus control device ⌐8

central control device ⌐7
communication unit ⌐701

load dispatching unit ⌐2

comprehension unit ⌐703

control unit ⌐704

apparatus control device ⌐8

communication unit ⌐202

database ⌐702

communication unit ⌐802

detection unit ⌐801

control unit ⌐203

control unit ⌐804

frequency gauge ⌐201

frequency gauge ⌐803

storage battery ⌐9

3 power grid

⌐5

renewable power source (solar power generator) ⌐111

renewable power source (wind power generator) ⌐112

33

FIG. 10A

FIG. 10B

FIG. 11A

Integrated value of the frequency deviation

FIG. 11B

Drooping characteristic line of
the storage battery (Group)

FIG. 12

FIG. 13

```
        ┌─ 7                              ┌─ 2
┌───────────────────────┐      ┌───────────────────────┐
│ central control device│      │  load dispatching unit│
└───────────┬───────────┘      └───────────┬───────────┘
            │                              │ ┌─ S1301
            │              ┌───────────────┴───────────┐
            │              │    Calculation of Area     │
            │              │        Requirement         │
            │              └───────────────┬───────────┘
            │                              │ ┌─ S1302
            │              ┌───────────────┴───────────┐
            │              │   Collection of the LFC    │
            │              │    adjustment capacity of  │
            │              │   thermal power generator  │
            │  Most recent P_{ES-DR2}      └───────────┬┘
            │──────────────────────────────────────►  │ ┌─ S3104
            │          └─ S1303           ┌───────────┴───────────┐
            │                             │    Calculation of LFC  │
            │                             │    assignment capacity │
            │                             │    LFC_{ES-DR2} for storage│
            │                             │     battery group      │
            │                             └───────────┬───────────┘
            │                                         │ ┌─ S1305
            │                             ┌───────────┴───────────┐
            │  DR2 charging/discharging   │    Generation of DR2   │
            │        gain line            │   charging/discharging │
            │◄────────────────────────────│        gain line       │
            │          └─ S1306           └───────────┬───────────┘
            │                                         │
```

FIG. 14

FIG. 15

storage battery output[kw]

charging
K·α(n)·P(n)

−Δf$_{max}$

discharging

Δf$_{max}$

This inclination is
(Gn)

800A

Integrated value of the frequency deviation

FIG. 16

```
        ┌9                              ┌8
┌──────────────────┐          ┌──────────────────────────┐
│  storage battery │          │  apparatus control device│
└──────────────────┘          └──────────────────────────┘
        │                                  │
        │                                  │ ┌ S1601
        │                      ┌────────────────────────────┐
        │                      │ Detection of grid frequency │
        │                      └────────────────────────────┘
        │                                  │
        │                                  │ ┌ S1602
        │                      ┌────────────────────────────┐
        │                      │ Calculation of integrated value│
        │                      │    Δf of frequency deviation │
        │                      └────────────────────────────┘
        │                                  │
        │                                  │ ┌ S1603
        │                      ┌────────────────────────────┐
        │                      │   Specification of charging │
        │                      │ amount or discharging amount on│
        │                      │ the basis of Δf and the local│
        │                      │ charging/discharging gain line│
        │                      └────────────────────────────┘
        │  Control of charging/discharging │
        │◄─────────────────────────────────│
        │                  └ S1604         │
        │                                  │
```

FIG. 17

```
        ⌐7                                    ⌐2
┌──────────────────────┐          ┌──────────────────────┐
│ central control device│          │  load dispatching unit│
└──────────────────────┘          └──────────────────────┘
                                              │  ⌐S1701
                                   ┌──────────────────────┐
                                   │ Calculation of required GF │
                                   │        capacity            │
                                   └──────────────────────┘
                                              │  ⌐S1702
                                   ┌──────────────────────┐
                                   │ Collection of the GF adjustment │
                                   │ capacity of thermal power       │
                                   │        generator                │
      S1703                        └──────────────────────┘
         Most  recent  P_{ES-DR3}
                                              │  ⌐S1704
                                   ┌──────────────────────┐
                                   │ Calculation of GF assignment │
                                   │ capacity GF_{ES-DR3} to storage │
                                   │      battery group           │
                                   └──────────────────────┘
                                              │  ⌐S1705
                                   ┌──────────────────────┐
                                   │ Generation of DR3 drooping │
                                   │ characteristic line        │
                                   └──────────────────────┘
       DR3 drooping characteristic line
                S1706
```

FIG. 18

FIG. 19

FIG. 20

## INTERNATIONAL SEARCH REPORT

| International application No. |
| --- |
| PCT/JP2015/070255 |

A. CLASSIFICATION OF SUBJECT MATTER
*H02J13/00(2006.01)i, H02J3/32(2006.01)i*

According to International Patent Classification (IPC) or to both national classification and IPC

B. FIELDS SEARCHED

Minimum documentation searched (classification system followed by classification symbols)
H02J13/00, H02J3/32

Documentation searched other than minimum documentation to the extent that such documents are included in the fields searched
Jitsuyo Shinan Koho 1922-1996 Jitsuyo Shinan Toroku Koho 1996-2015
Kokai Jitsuyo Shinan Koho 1971-2015 Toroku Jitsuyo Shinan Koho 1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y <br> A | WO 2013/172022 A1 (Panasonic Corp.), <br> 21 November 2013 (21.11.2013), <br> paragraphs [0037] to [0120]; fig. 1 to 13 <br> & US 2014/0222239 A1 | 1-7,9-21 <br> 8 |
| Y <br> A | JP 2013-258806 A (Panasonic Corp.), <br> 26 December 2013 (26.12.2013), <br> paragraphs [0085] to [0097]; fig. 4 to 5 <br> (Family: none) | 1-7,9-21 <br> 8 |
| A | JP 2006-277385 A (Kyocera Corp.), <br> 12 October 2006 (12.10.2006), <br> paragraphs [0015] to [0030]; fig. 1 to 3 <br> (Family: none) | 1-21 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 September 2015 (02.09.15) | 15 September 2015 (15.09.15) |

| Name and mailing address of the ISA/ <br> Japan Patent Office <br> 3-4-3,Kasumigaseki,Chiyoda-ku, <br> Tokyo 100-8915,Japan | Authorized officer |
| --- | --- |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014039353 A
- JP 5460622 B

- JP 2014156203 A